# EUROPÄISCHE PATENTSCHRIFT

(11) **EP 2 944 421 B1**
(45) Veröffentlichungstag und Bekanntmachung des Hinweises auf die Patenterteilung: **18.07.2018**
(21) Anmeldenummer: 15167585.7
(22) Anmeldetag: 13.05.2015
(51) Int. Cl.: B24B 5/30, B24B 5/35, F16F 15/10, F16F 7/108, B24B 5/04, B24B 41/04, B24B 41/00, B24B 5/18

(54) **DÄMPFUNGSEINRICHTUNG FÜR EINE SPINDEL EINER SCHLEIFMASCHINE SOWIE SCHLEIFMASCHINE MIT EINER DÄMPFUNGSEINRICHTUNG**
DAMPING DEVICE FOR A SPINDLE OF A GRINDING MACHINE, AND GRINDING MACHINE INCLUDING A DAMPING DEVICE
DISPOSITIF D'AMORTISSEMENT POUR UNE BROCHE D'UNE AFFÛTEUSE ET AFFÛTEUSE DOTÉE D'UN DISPOSITIF D'AMORTISSEMENT

(30) Priorität: 16.05.2014 DE 102014106926
(43) Veröffentlichungstag der Anmeldung: 18.11.2015
(73) Patentinhaber: Schaudt Mikrosa GmbH, 04179 Leipzig (DE)
(72) Erfinder: Otto, Karsten, 04720 Döbeln (DE); Mäurer, Michael, 04207 Leipzig (DE)
(74) Vertreter: Witte, Weller & Partner Patentanwälte mbB

(56) Entgegenhaltungen:
- EP-A1- 1 266 710
- WO-A1-97/30820
- WO-A1-2014/033020
- DE-A1-102004 032 177
- FR-A- 975 056
- US-A- 2 112 695
- US-A- 2 582 873
- US-A- 3 642 378
- US-A- 3 692 370

## Beschreibung

Die vorliegende Erfindung betrifft eine spitzenlose Schleifmaschine mit einer Dämpfungseinrichtung für eine Spindel der Schleifmaschine, insbesondere eine Dämpfungseinrichtung für eine Schleifspindel oder Regelspindel. Die Erfindung betrifft ferner eine spitzenlose Schleifmaschine mit einer mit einer Dämpfungseinrichtung versehenen Spindel, insbesondere einer Schleifspindel oder Regelspindel. Ferner betrifft die Erfindung eine Schleifmaschine, insbesondere eine spitzenlose Schleifmaschine, zur spanenden Bearbeitung von Werkstoffen, insbesondere zum Außenrundschleifen.

Aus der US 2,582,873 A ist ein tragbares Schleifgerät mit einer flexiblen Antriebswelle bekannt, wobei die Antriebswelle zwei voneinander versetzte Abschnitte aufweist, zwischen denen eine Platte aus einem Elastomerwerkstoff, etwa aus einem Gummiwerkstoff, aufgenommen ist.

Aus der EP 1 266 710 A1 ist eine Einrichtung zur Vibrationsdämpfung für ein Bearbeitungswerkzeug bekannt, mit einem Werkzeugkörper, der mit Schneideinsätzen versehen ist, wobei der Werkzeugkörper einen hohlen Abschnitt und ein Gewichtselement im hohlen Abschnitt aufweist, wobei im hohlen Abschnitt ferner ein viskoelastischer Körper in einem Spalt zwischen dem Gewichtselement und dem Werkzeugkörper vorgesehen ist.

Aus der US 3,642,378 A ist eine Bohrstange bekannt, die einen Hohlraum aufweist, in dem ein Schaft angeordnet ist, der an seinem Ende ein Gewicht trägt, wobei der Hohlraum ferner mit einem viskosen Fluid befüllt ist.

Aus der US 3,692,370 A ist eine Dämpfungseinrichtung zur Erhöhung der dynamischen Steifigkeit einer Spindel einer spitzenlose Schleifmaschine gemäß dem Oberbegriff des Anspruchs 1 bekannt, die als Anbauteil oder Zusatzteil für die Spindel ausgebildet ist. Die Dämpfungseinrichtung ist nicht in die Spindel integriert. Die Dämpfungseinrichtung weist ein Dämpfungselement auf Basis eines viskoelastischen Werkstoffes auf. Das Dämpfungselement ist rohrartig gestaltet und auf der Spindel aufgenommen. Das Dämpfungselement ist von einer Hülle umgeben, die auch rohrartig gestaltet ist. Das Dämpfungselement wird durch Injizieren eines fließfähigen Materials in einen Zwischenraum zwischen der Spindel und der Hülle und anschließendes Aushärten geformt. Die Hülle, das Dämpfungselement und die Spindel bilden eine gebaute Verbundstruktur.

Aus der DE 10 2004 032 177 A1 ist eine Schwingungsdämpfungsvorrichtung für eine Elektrohandwerkzeugmaschine gekannt, wobei die Schwingungsdämpfungsvorrichtung ein Rotationselement aufweist, das mit einer Antriebswelle kraftschlüssig verbindbar ist, wobei das Rotationselement wenigstens eine mit einem schütt- oder fließfähigen Material gefüllte Kammer aufweist, über die Schwingungsenergie absorbierbar ist. Die Schwingungsdämpfungsvorrichtung weist eine Öffnung auf, die durch die Antriebswelle durchragt wird.

Aus der WO 1997/030820 A1 ist eine Hülse zum Halten einer Elektrospindel einer Hochgeschwindigkeits-Werkzeugmaschine bekannt, wobei die Hülse eine dichte Kammer bereitstellt, die durch die Kontaktflächen mit der Elektrospindel und zwei Runddichtringen begrenzt wird, die für die Dichtigkeit zwischen den genannten Kontaktflächen sorgen, um diese Kammer mit Öl füllen zu können, wobei die Hülse drei nach innen gerichtete, aufeinanderfolgende Schultern umfasst, die Kränze bilden, wobei die erste, äußere Schulter, die am Eingang der Hülse angeordnet ist, einen Öffnungsdurchmesser begrenzt, der größer ist als der Öffnungsdurchmesser der zwei anderen Schultern, der Zwischenschulter und der inneren Schulter, so dass der hintere Abschnitt der Elektrospindel mit Spiel in die Hülse zwischen die beiden letzten Schultern eingefügt und an der ersten Schulter befestigt werden kann.

Schleifmaschinen zur spanenden Bearbeitung sind im Stand der Technik allgemein bekannt. Ferner sind spitzenlose Schleifmaschinen bekannt, insbesondere spitzenlose Rundschleifmaschinen. Spitzenlose Rundschleifmaschinen können etwa als Außenrundschleifmaschinen oder Innenrundschleifmaschinen ausgestaltet sein. Spitzenlose Schleifmaschinen können allgemein zur Bearbeitung runder Werkstücke, vorzugsweise rotationssymmetrischer Werkstücke eingesetzt werden. Spitzenlose Schleifmaschinen können etwa zum Einstechschleifen oder zum Durchgangsschleifen verwendet werden.

Spitzenlose Schleifmaschinen eignen sich insbesondere für die Serienfertigung und die Massenfertigung. Spitzenlose Schleifmaschinen weisen üblicherweise eine Schleifscheibe sowie eine Regelscheibe auf, wobei sowohl die Schleifscheibe als auch die Regelscheibe rotatorisch antreibbar sind. Die Schleifscheibe und die Regelscheibe sind üblicherweise parallel zueinander angeordnet und dazu ausgebildet, ein zu bearbeitendes Werkstück zwischen sich aufzunehmen. Üblicherweise weist die Schleifscheibe einen abrasiven Werkstoff auf bzw. ist mit diesem beschichtet. Regelscheibe können etwa Gummiwerkstoffe aufweisen bzw. mit diesen beschichtet sein. Alternativ können Regelscheiben keramische Werkstoffe aufweisen bzw. mit diesen beschichtet sein.

Ferner weisen spitzenlose Schleifmaschinen üblicherweise eine Werkstückauflage auf, die als Abstützung für das Werkstück fungiert. Während einer Schleifbearbeitung in einer spitzenlosen Schleifmaschine kann das Werkstück demgemäß durch die Schleifscheibe, durch die Regelscheibe sowie durch die Werkstückauflage kontaktiert werden. Die Schleifscheibe und die Regelscheibe können regelmäßig parallel zueinander angeordnet sein. Es ist jedoch auch vorstellbar, die Regelscheibe um einen kleinen Winkel gegenüber der Schleifscheibe zu versetzen. Auf diese Weise kann eine Vorschubbewegung für das Werkstück erzeugt werden.

Häufig weist die Schleifscheibe einen größeren Durchmesser auf als die Regelscheibe. Die Schleifscheibe und die Regelscheibe sind regelmäßig mit Antrieben versehen bzw. mit diesen koppelbar. Üblicherweise werden die Schleifscheibe und die Regelscheibe mit dem gleichen Drehsinn angetrieben, wobei jedoch die jeweiligen Antriebe derart gesteuert werden, dass eine Umfangsgeschwindigkeit der Schleifscheibe von einer Umfangsgeschwindigkeit der Regelscheibe abweicht. Da das Werkstück während des Schleifvorgangs sowohl im Eingriff mit der Schleifscheibe als auch im Eingriff mit der Regelscheibe steht, die üblicherweise gleichsinnig angetrieben werden, wird dieses durch das Zusammenwirken der Schleifscheibe und der Regelscheibe in eine Rotation mit einem Drehsinn versetzt, der dem Drehsinn der Schleifscheibe bzw. der Regelscheibe entgegengesetzt ist. Aufgrund der unterschiedlichen Umfangsgeschwindigkeiten der Schleifscheibe und der Regelscheibe kann sich zwischen dem Werkstück und der Schleifscheibe eine Relativbewegung ergeben, die Schlupf umfassen kann. Auf diese Weise kann Material vom Werkstück abgetragen werden.

Beim Schleifen auf einer Schleifmaschine, insbesondere auf einer spitzenlosen Rundschleifmaschine, etwa einer spitzenlosen Außenrundschleifmaschine, werden aufgrund dynamischer Effekte regelmäßig dynamische Kräfte erzeugt, die sich nachteilig auf den Schleifprozess, insbesondere auf die Genauigkeit auswirken können. Auf diese Weise kann insbesondere die dynamische Nachgiebigkeit der Schleifmaschine, bzw. von Komponenten davon, beeinträchtigt werden. Dies kann mit dem Auftreten von dominanten dynamischen Nachgiebigkeiten einhergehen. Infolgedessen kann es etwa zu einem Rattern kommen. Eine verringerte dynamische Steifigkeit bzw. dominante dynamische Nachgiebigkeiten können zu einem erhöhten Verschleiß der Schleifscheibe bzw. der Regelscheibe und zu einer verringerten Werkstückqualität führen. Insbesondere kann die Genauigkeit der Bearbeitung beeinträchtigt werden. Ferner können, insbesondere im Resonanzfall, erhöhte Bauteilbelastungen bei der Schleifmaschine auftreten, die sich etwa nachteilig auf Lagerungen, Führungen, Antriebe und Ähnliches auswirken können.

Maßnahmen zur Beseitigung von dynamischen Schwachstellen, insbesondere zur Vermeidung übermäßiger dynamischer Nachgiebigkeiten sind im Stand der Technik bekannt. Dies kann zum einen eine allgemeine konstruktive Auslegung der Schleifmaschine betreffen. Ferner wäre es vorstellbar, Schleifparameter zu variieren, um nachteilige dynamische Effekte beseitigen bzw. ausschließen zu können. Schleifparameter können etwa Schleifwerkstoffe, Geometrien der Schleifscheibe bzw. der Regelscheibe, Antriebsparameter (Drehzahl bzw. Umfangsgeschwindigkeit der Schleifscheibe bzw. der Regelscheibe), Zustellkräfte und Ähnliches betreffen. Konstruktive Änderungen der Schleifmaschine bzw. eine entsprechende konstruktive Auslegung der Schleifmaschine kann sich etwa dann empfehlen, wenn diese im Wesentlichen als Einzweckmaschine verwendet wird.

Es sind jedoch Anwendungen vorstellbar, die allein auf Basis konventioneller Ansätze zur Reduktion der dynamischen Nachgiebigkeit bzw. zur Beseitigung dynamischer Schwachstellen nicht oder nur mit wesentlich erhöhtem Aufwand realisierbar sind.

Ferner sind im Stand der Technik grundsätzlich Systeme zur Beeinflussung bzw. Dämpfung des Schwingungsverhaltens von Schleifmaschinen bekannt. Derartige Systeme können etwa als aktive Dämpfungssysteme oder als passive Dämpfungssysteme ausgestaltet sein. Aktive Dämpfungssysteme weisen regelmäßig zumindest einen Aktor auf, der in Abhängigkeit zumindest einer erfassten Größe ansteuerbar ist, die das Schwingungsverhalten der Schleifmaschine beschreibt. Somit sind aktive Dämpfungssysteme häufig nur mit großem Aufwand realisierbar, da eine entsprechende Steuerungstechnik, Sensorik sowie entsprechende Aktoren vorgehalten werden müssen. Passive Dämpfungssysteme können etwa Feder-Masse-Systeme umfassen, die gestellseitig vorgesehen sind, um das Dämpfungsverhalten der Schleifmaschine günstig zu beeinflussen. Es hat sich jedoch gezeigt, dass allein auf Basis derartiger konventioneller Systeme bei zumindest einigen Anwendungsfällen keine hinreichende Optimierung des Schwingungsverhaltens der Schleifmaschine erzielbar ist.

Vor diesem Hintergrund liegt der Erfindung die Aufgabe zugrunde, eine Dämpfungseinrichtung für eine Spindel einer Schleifmaschine, insbesondere für eine Schleifspindel oder Regelspindel einer spitzenlosen Schleifmaschine, anzugeben, die eine wirksame Schwingungsdämpfung und eine wirksame Reduktion dynamischer Nachgiebigkeiten der Spindel erlaubt. Vorzugsweise kann die Dämpfungseinrichtung mit begrenztem Aufwand realisiert werden. Weiter bevorzugt eignet sich die Dämpfungseinrichtung zur Nachrüstung bei sich bereits im Betrieb befindlichen Schleifmaschinen, insbesondere spitzenlosen Schleifmaschinen. Insbesondere soll die Dämpfungseinrichtung dazu beitragen können, die Lebensdauer der Schleifmaschine, insbesondere der Schleifspindel oder Regelspindel bzw. der entsprechenden Spindelantriebe, zu erhöhen. Ferner soll sich möglichst die Genauigkeit der Schleifbearbeitung verbessern. Ferner ist es bevorzugt, wenn die Dämpfungseinrichtung mit überschaubarem Aufwand an einen aktuell gegebenen Anwendungsfall anpassbar ist. Schließlich sollen eine mit einer derartigen Dämpfungseinrichtung versehene Spindel sowie eine Schleifmaschine angegeben werden, die zumindest eine Schleifspindel oder Regelspindel mit einer entsprechenden Dämpfungseinrichtung umfasst.

Diese Aufgabe wird gelöst durch eine spitzenlose Schleifmaschine gemäß Anspruch 1, nämlich eine spitzenlose Schleifmaschine mit einem Maschinenbett, einer Schleifspindel, die mit einem Spindelantrieb koppelbar ist und zur Aufnahme einer Schleifscheibe ausgebildet ist, einer Regelspindel, die mit einem Spindelantrieb koppelbar ist und zur Aufnahme einer Regelscheibe ausgebildet ist, einer Werkstückauflage zur Aufnahme eines zu bearbeitenden Werkstücks zwischen der Schleifspindel und der Regelspindel, wobei die Schleifspindel und die Regelspindel am Maschinenbett gelagert sind und relativ zueinander verfahrbar sind, wobei zumindest die Schleifspindel oder die Regelspindel als Spindel mit einer integrierten Dämpfungseinrichtung ausgebildet ist, wobei die Dämpfungseinrichtung zumindest eine Dämpfungseinheit mit einem Hilfsmassenabschnitt, einem elastischen Abschnitt und einem Dämpfungsabschnitt aufweist, die in die Spindel integriert sind und die gemeinsam ein gedämpftes schwingungsfähiges System zur Erhöhung der dynamischen Steifigkeit der Spindel bilden.

Die Aufgabe der Erfindung wird auf diese Weise vollkommen gelöst.

Erfindungsgemäß wird nämlich eine Dämpfungseinrichtung bereitgestellt, die in die Spindel integrierbar ist und somit an dem Ort, wo sich dynamische Effekte am ehesten nachteilig auswirken können, zur Schwingungsreduktion bzw. zur Erhöhung der dynamischen Steifigkeit der Spindel beitragen kann. Mit anderen Worten kann also direkt in der (angetriebenen bzw. antreibbaren) Spindel eine Schwingungskompensation erfolgen. Auf diese Weise kann sich eine erhöhte Prozessstabilität ergeben. Die Belastung der Spindel während des Schleifvorgangs kann sich deutlich reduzieren. Dies kann sich vorteilhaft auf die Lebensdauer der Spindel sowie auf die Lebensdauer weiterer Komponenten der Schleifmaschine auswirken. Die Bearbeitungsgenauigkeit und insbesondere deren Reproduzierbarkeit können sich weiter erhöhen. Dies kann günstige Auswirkungen auf Prozessfähigkeiten und ähnliche Qualitätsparameter haben.

Da die zumindest eine Dämpfungseinheit mit dem Hilfsmassenabschnitt, dem elastischen Abschnitt und dem Dämpfungsabschnitt in die Spindel integriert sind, kann sich eine geschlossene, von außen nahezu nicht wahrnehmbare Gestaltung ergeben. Ferner kann auf diese Weise ein Schutz der Dämpfungseinheit gegenüber äußeren Einwirkungen erhöht werden. Im Sinne dieser Offenbarung soll unter dem Begriff "integriert" gerade keine Ausgestaltung verstanden werden, die wesentliche Bauteile aufweist, die "von außen" an die Spindel angebracht werden. Vorzugsweise ergibt sich, zumindest gemäß einiger Ausgestaltungen, bei der mit der Dämpfungseinrichtung versehenen Spindel ein äußeres Erscheinungsbild, das nicht oder nur unwesentlich vom Erscheinungsbild einer konventionellen Spindel abweicht. Demgemäß kann die obige Ausgestaltung dadurch weitergebildet werden, dass die Dämpfungseinheit mit dem Hilfsmassenabschnitt, dem elastischen Abschnitt und dem Dämpfungsabschnitt derart in die Spindel integriert sind, dass diese nicht oder nur unwesentlich über eine Außenkontur der Spindel hinausragen.

Erfindungsgemäß wird eine derartige Dämpfungseinrichtung bei einer Spindel einer spitzenlosen Schleifmaschine verbaut. Dabei kann es sich insbesondere um eine spitzenlose Außenrundschleifmaschine handeln. Die Dämpfungseinrichtung kann in die Schleifspindel der Schleifmaschine integriert werden. Alternativ kann die Dämpfungseinrichtung in die Regelspindel der Schleifmaschine integriert werden. Es versteht sich, dass sowohl die Schleifspindel als auch die Regelspindel der Schleifmaschine mit einer entsprechenden Dämpfungseinrichtung versehen sein können.

Gemäß einer weiteren Ausgestaltung ist die zumindest eine Dämpfungseinheit als passive Hilfsmassen-Dämpfungseinheit ausgebildet. Mit anderen Worten ist es bevorzugt, dass die Dämpfungseinrichtung keine aktiven Systeme (Sensoren, Aktoren oder dergleichen) umfasst. Auf diese Weise kann die Dämpfungseinrichtung mit geringem Aufwand realisiert werden. Insbesondere ist es bevorzugt, wenn die Dämpfungseinrichtung bzw. eine mit der Dämpfungseinrichtung versehene Spindel als "Austauschteil" ausgestaltet ist und eine bestehende konventionelle Spindel einer Schleifmaschine ersetzen kann. Auf diese Weise ist die Dämpfungseinrichtung mit geringem Aufwand bei existierenden Schleifmaschinen nachrüstbar. Vorzugsweise kann die Dämpfungseinrichtung ohne konstruktive Änderungen einer Außenkontur oder Schnittstellengestalt der Schleifspindel oder der Regelspindel implementiert werden. Der elastische Abschnitt kann etwa als Querschnittsreduzierung ausgebildet sein. Die Querschnittsreduzierung kann ähnlich einer Feder nachgiebig gestaltet sein und Schwingungen, insbesondere Biegeschwingungen, vollziehen.

Vorzugsweise ist die Dämpfungseinrichtung als breitbandiger Dämpfer ausgestaltet, also als Dämpfer, der zumindest in einem Frequenzband, das übliche Betriebsfrequenzen aufweist, zur Verringerung der dynamischen Nachgiebigkeit beiträgt. Übliche Betriebsfrequenzen können etwa 100 Hz bis 500 Hz, vorzugsweise etwa 200 Hz bis 400 Hz (Hertz) betreffen.

Grundsätzlich kann zur Erhöhung der dynamischen Steifigkeit eine (bedingte) Erhöhung der statischen Nachgiebigkeit, also eine Verringerung der statischen Steifigkeit, der Spindel in Kauf genommen werden. Dieser vermeintliche Nachteil wird durch das verbesserte dynamische Verhalten kompensiert bzw. überkompensiert.

Ein Hilfsmassendämpfer kann üblicherweise als Kombination zumindest eines Massestücks, eines elastischen Elements sowie eines Dämpfungselements aufgefasst werden. Demgemäß ist ein Hilfsmassendämpfer üblicherweise selbst als schwingfähiges System ausgestaltet. Dynamische Schwingungen der Schleifmaschine, die sich auf die Spindel auswirken, können wiederum den Hilfsmassendämpfer in Schwingungen versetzen. Auf diese Weise kann sich eine Kompensation nachteiliger dynamischer Effekte ergeben. Insbesondere können Resonanzeffekte (etwa Resonanzüberhöhungen) minimiert werden.

Gemäß einer weiteren Ausgestaltung der Dämpfungseinrichtung sind der Hilfsmassenabschnitt, der elastische Abschnitt und der Dämpfungsabschnitt in einem Hohlprofilabschnitt, insbesondere einem Rohrprofil, der Spindel aufgenommen. Mit anderen Worten kann die Spindel zumindest abschnittsweise als Hohlkörper ausgestaltet sein. Auf diese Weise kann die Dämpfungseinrichtung ohne zusätzlichen Bauraumaufwand in die Spindel integriert werden. Auch wenn sich - verglichen mit einem Vollprofil - beim Hohlprofilabschnitt der Spindel eine Verringerung der Querschnittsfläche ergeben kann, die grundsätzlich mit einer erhöhten statischen Nachgiebigkeit einhergehen kann, empfiehlt sich die Aufnahme im Hohlprofilabschnitt zur Verringerung der dynamischen Nachgiebigkeit.

Mit anderen Worten kann zumindest ein Abschnitt der Spindel kartuschenartig oder patronenartig gestaltet sein und die Dämpfungseinrichtung umgeben bzw. begrenzen. Beispielhaft kann sich der Hohlprofilabschnitt manschettenartig um die Dämpfungseinrichtung legen. Auf diese Weise ist die Dämpfungseinrichtung vor äußeren Umwelteinflüssen geschützt. Die Dämpfungseinrichtung ist von außen "unsichtbar" in die Spindel integriert. Vorzugsweise ist der Hohlprofilabschnitt als Rohrprofil ausgestaltet. Vorzugsweise ist das Rohrprofil als rotationssymmetrisches oder im Wesentlichen rotationssymmetrisches Rohrprofil gestaltet. Der Hohlprofilabschnitt kann zumindest abschnittsweise mit einer Mantelfläche versehen sein, die als Sitz für eine Schleifscheibe oder Regelscheibe der Schleifmaschine fungieren kann. Vorzugsweise handelt es sich bei der Mantelfläche um eine rotationssymmetrische Mantelfläche. Die Mantelfläche kann etwa als konische Fläche oder als zylindrische Fläche ausgestaltet sein. Alternativ kann die Mantelfläche des Hohlprofilabschnitts auch mit Gestaltelementen zur Drehmitnahme versehen sein. Demgemäß könnte der Hohlprofilabschnitt etwa einen nichtrotationssymmetrischen Querschnitt umfassen. Andere Gestaltelemente zur Drehmitnahme sind denkbar, etwa Mehrkantprofile, Keilwellenprofile, Polygonprofile oder Ähnliches.

Gemäß einer weiteren Ausgestaltung weist der Dämpfungsabschnitt zumindest einen Hohlraum auf, der mit einem Dämpfungsfluid, insbesondere mit einem viskosen Dämpfungsfluid, befüllbar ist. Vorzugsweise wird der Hohlraum durch den Hohlprofilabschnitt bereitgestellt. Ein Dämpfungsfluid im Dämpfungsabschnitt kann die Eigendämpfung der Dämpfungseinrichtung günstig beeinflussen. Grundsätzlich kann das Dämpfungsfluid dazu ausgebildet sein, dynamische Energie abzubauen, etwa durch Wärmeabgabe. Vorzugseise ist das Dämpfungsfluid eine viskose Flüssigkeit, insbesondere ein Öl, vorzugsweise ein Silikonöl.

Gemäß einer Weiterbildung dieser Ausgestaltung wird das Dämpfungsverhalten der Dämpfungseinrichtung durch Wahl einer Viskosität des Dämpfungsfluids beeinflusst. Je nach Wahl einer hohen oder niedrigen Viskosität kann beispielhaft eine Anpassung des Dämpfungsverhaltens an niedrigfrequente Schwingungen oder hochfrequente Schwingungen erfolgen.

Es versteht sich, dass grundsätzlich auch der Hilfsmassenabschnitt und/oder der elastische Abschnitt zumindest teilweise zur Eigendämpfung der Dämpfungseinrichtung beitragen können. Die dämpfende Wirkung kann sich durch die Trägheit bzw. durch innere Reibungen ergeben.

Gemäß einer weiteren Ausgestaltung der Dämpfungseinrichtung ist das Dämpfungsfluid ein Silikonöl, insbesondere ein Silikonöl mit einer kinematischen Viskosität im Bereich von ungefähr 50 mm²/s bis ungefähr 1000 mm²/s, vorzugsweise im Bereich von ungefähr 50 mm²/s bis ungefähr 200 mm²/s, weiter bevorzugt von ungefähr 100 mm²/s. Silikonöle werden allgemein auch als Diorganopolysiloxane bezeichnet. Silikonöle weisen eine gute Wärmbeständigkeit auf. Silikonöle neigen nicht zur Schaumbildung.

Gemäß einer weiteren Ausgestaltung weist die Dämpfungseinrichtung ferner zumindest ein Ausgleichselement auf, das zur Kompensation von Druckschwankungen oder Volumenschwankungen des Dämpfungsfluids in dem zumindest einen Hohlraum ausgebildet ist. Vorzugsweise ist das zumindest eine Ausgleichselement aus einem elastomeren Werkstoff gebildet. Insbesondere kann das zumindest eine Ausgleichselement aus einem Fluorelastomer gebildet sein. Vorzugsweise ist das zumindest eine Ausgleichselement aus einem Moosgummiwerkstoff gebildet. Insbesondere eignet sich Fluormoosgummi zur Herstellung des zumindest einen Ausgleichselements.

Dies hat den wesentlichen Vorteil, dass Schwankungen des Dämpfungsfluids durch das Ausgleichselement ausgeglichen werden können. Insbesondere ist das Ausgleichselement ein kompressibles Ausgleichselement. Vorzugsweise weist das Ausgleichselement eine geschlossene Außenhaut auf. Dies ist etwa bei einigen Moosgummiwerkstoffen der Fall. Moosgummiwerkstoffe können allgemein auch als geschäumte Elastomere bezeichnet werden. Schwankungen im Dämpfungsfluid bzw. Schwankungen des Füllstands des Dämpfungsfluids können insbesondere durch Temperaturschwankungen bedingt sein. Temperaturerhöhungen des Dämpfungsfluids können sich beispielsweise im Betrieb der mit der Dämpfungseinrichtung versehenen Spindel ergeben, wenn über das Dämpfungsfluid eine Wandlung von kinetischer Energie bzw. Schwingungsenergie in thermische Energie erfolgt. Das zumindest eine Ausgleichselement kann dazu beitragen, dass sich derartige Schwankungen nur im begrenzten Maße auf das Dämpfungsverhalten der Dämpfungseinrichtung auswirken. Vorzugsweise ist das zumindest eine Ausgleichselement aus einem Fluormoosgummiwerkstoff hergestellt. Fluormoosgummiwerkstoffe weisen eine ausgezeichnete Temperaturbeständigkeit auf. Ferner ist eine gute Alterungsbeständigkeit gegeben. Das zumindest eine Ausgleichseleelement weist vorzugsweise eine geringe Shore-Härte auf. Allgemein ist es bevorzugt, wenn das zumindest eine Ausgleichselement durch Kompression und/oder Expansion auf Schwankungen, insbesondere Druckschwankungen oder Volumenschwankungen, des Dämpfungsfluids reagieren kann.

Gemäß einer weiteren Ausgestaltung umfasst die Dämpfungseinrichtung eine erste Dämpfungseinheit, die einem ersten Spindelabschnitt zugeordnet ist, und eine zweite Dämpfungseinheit, die einem zweiten Spindelabschnitt zugeordnet ist, wobei die erste Dämpfungseinheit und die zweite Dämpfungseinheit axial voneinander versetzt und einander zugewandt sind.

Auf diese Weise kann die Dämpfungseinrichtung etwa zumindest zwei Hilfsmassenabschnitte und zumindest zwei elastische Abschnitte aufweisen, die eine noch gezieltere Anpassung des Dämpfungsverhaltens erlauben. Insbesondere kann auf Basis zweier Dämpfungseinheiten ein breitbandiges Dämpfungsverhalten bewirkt werden.

Gemäß einer Weiterbildung dieser Ausgestaltung weisen die erste Dämpfungseinheit und die zweite Dämpfungseinheit einen gemeinsamen Dämpfungsabschnitt auf, der zumindest einen mit einem Dämpfungsfluid befüllbaren Hohlraum aufweist. Auf diese Weise kann sich der konstruktive Aufwand zur Bereitstellung der Dämpfungseinrichtung verringern, da nicht jede Dämpfungseinheit einen separaten (räumlich getrennten) Dämpfungsabschnitt benötigt.

Eine weitere beispielhafte Ausgestaltung betrifft eine Spindel für eine Schleifmaschine, insbesondere eine Schleifspindel und/oder Regelspindel für eine spitzenlose Schleifmaschine, wobei die Spindel um ihre Längsachse rotatorisch antreibbar ist, mit einer integrierten Dämpfungseinrichtung nach irgendeinem der vorstehend genannten Aspekte.

Vorzugsweise eignet sich die Spindel als Austauschteil (replacement part) für konventionelle Spindeln. Auf diese Weise können existierende Schleifmaschinen kostengünstig umgerüstet werden. Die Dämpfungseinrichtung kann vollständig in die (rotatorisch antreibbare) Spindel integriert werden. Es ist nicht erforderlich, separate Aktoren oder Sensoren vorzusehen, da die integrierte Dämpfungseinrichtung im Wesentlichen als passive Dämpfungseinrichtung ausgestaltet ist.

Gemäß einer Weiterbildung dieser Ausgestaltung weist die Spindel ferner einen ersten Zapfen und einen zweiten Zapfen auf, die voneinander abgewandte Enden der Spindel definieren, wobei die Zapfen über einen Hohlprofilabschnitt, insbesondere über ein Rohrprofil, miteinander verbunden sind, und wobei die Dämpfungseinrichtung im Hohlprofilabschnitt zwischen dem ersten Zapfen und dem zweiten Zapfen aufgenommen ist.

Mit anderen Worten können der erste Zapfen und der zweite Zapfen im Wesentlichen drehsteif über den Hohlprofilabschnitt miteinander verbunden sein. Zu diesem Zweck können der erste Zapfen und der zweite Zapfen jeweils einen Bund oder Kragen aufweisen, der entsprechende voneinander abgewandte axiale Enden des Hohlprofilabschnitts kontaktiert.

Von außen betrachtet kann die Spindel demgemäß im Wesentlichen dreiteilig gestaltet sein. Ein erster Teil wird im Wesentlichen durch den ersten Zapfen definiert. Ein zweiter Teil wird im Wesentlichen durch den zweiten Zapfen definiert. Zwischen dem ersten Teil und dem zweiten Teil kann sich ein dritter Teil erstrecken, der (von außen) im Wesentlichen durch den Hohlprofilabschnitt definiert wird. Vorzugsweise ist am Hohlprofilabschnitt eine Aufnahme für eine Schleifscheibe oder Regelscheibe ausgebildet.

Der erste Zapfen und der zweite Zapfen können als Lagerzapfen gestaltet sein. Demgemäß können der erste und der zweite Zapfen mit entsprechenden Lagerungen für die Spindel kombiniert werden, um die Spindel drehbar an der Schleifmaschine aufzunehmen. Zumindest einer der Zapfen, vorzugsweise der erste Zapfen, kann ferner auch als Antriebszapfen gestaltet sein. Der als Antriebszapfen ausgestaltete Zapfen kann mit einem Spindelantrieb für die Spindel gekoppelt werden. Auf diese Weise kann insbesondere eine Drehbewegung zur Erzeugung einer Rotation der Spindel auf die Spindel übertragen werden.

Gemäß einer weiteren Ausgestaltung der Spindel ist der erste Zapfen einem ersten Spindelabschnitt und der zweite Zapfen einem zweiten Spindelabschnitt zugeordnet, wobei der erste Spindelabschnitt und der zweite Spindelabschnitt mittelbar über den Hohlprofilabschnitt miteinander verbunden sind, wobei zumindest der erste Spindelabschnitt und der zweite Spindelabschnitt mit einem Hilfsmassenabschnitt einer Dämpfungseinheit der Dämpfungseinrichtung versehen sind, und wobei der Hilfsmassenabschnitt vom Hohlprofilabschnitt umschlossen ist.

Mit anderen Worten können der erste Zapfen und der zweite Zapfen an ihren einander zugewandten Enden jeweils in einen Hilfsmassenabschnitt übergehen. Der erste Hilfsmassenabschnitt und der zweite Hilfsmassenabschnitt können aneinander zugewandt sein. Der erste Hilfsmassenabschnitt und der zweite Hilfsmassenabschnitt können zwischen sich einen axialen Spalt definieren, der vom Hohlprofilabschnitt umschlossen ist. Die Spindel kann als gebaute Spindel gestaltet sein.

Gemäß einer weiteren Ausgestaltung der Spindel ist der jeweilige Hilfsmassenabschnitt einstückig mit dem Zapfen des entsprechenden Spindelabschnitts ausgebildet, wobei der jeweilige elastische Abschnitt durch eine Materialschwächung im Spindelabschnitt gebildet ist, die zwischen dem Hilfsmassenabschnitt und dem Zapfen angeordnet ist, und wobei der elastische Abschnitt vom Hohlprofilabschnitt umschlossen ist.

Die Materialschwächung kann etwa als Einschnürung oder Einstich im jeweiligen Spindelabschnitt ausgebildet sein. Die Materialschwächung kann auch als Steg bezeichnet sein. Die Materialschwächung kann auch als Querschnittsverringerung bezeichnet werden. Die Materialschwächung verstärkt das elastische Verhalten des elastischen Abschnitts. Ein (axialer) Querschnitt sowie eine axiale Erstreckung der jeweiligen Materialschwächung kann die Elastizität des ersten elastischen Abschnitts bzw. des zweiten elastischen Abschnitts beeinflussen. Sofern der elastische Abschnitt des jeweiligen Spindelabschnitts im Wesentlichen rotationssymmetrisch, etwa zylindrisch gestaltet ist, kann das Dämpfungsverhalten der Dämpfungseinrichtung durch Wahl des jeweiligen Durchmessers angepasst bzw. abgestimmt werden. Insbesondere hat sich gezeigt, dass es von Vorteil sein kann, wenn der erste elastische Abschnitt einen ersten Durchmesser und der zweite elastische Abschnitt einen zweiten Durchmesser aufweist, die sich voneinander unterscheiden. Die sich ergebenden unterschiedlichen Elastizitäten können sich günstig auf die Breitbandigkeit des Dämpfungsverhaltens auswirken.

Insgesamt betrachtet kann jeder Spindelabschnitt entlang seiner axialen Erstreckung einen Zapfen, einen Bund oder Kragen, einen elastischen Abschnitt sowie einen Hilfsmassenabschnitt umfassen. Vorzugsweise ist jeder Spindelabschnitt im Wesentlichen als rotationssymmetrisches Teil ausgestaltet.

Es sind grundsätzlich auch Gestaltungen der Spindel denkbar, bei denen lediglich ein Spindelabschnitt (der beiden Spindelabschnitte) mit einer entsprechenden Dämpfungseinheit versehen ist. Dies heißt mit anderen Worten, bei dieser Ausgestaltung weist nur ein Spindelabschnitt einen elastischen Abschnitt sowie einen Hilfsmassenabschnitt auf. Auch auf diese Weise kann sich für bestimmte Anwendungsfälle ein günstiges Dämpfungsverhalten ergeben.

Gemäß einer weiteren Ausgestaltung weist der erste Spindelabschnitt einen ersten Hilfsmassenabschnitt und der zweite Spindelabschnitt einen zweiten Hilfsmassenabschnitt auf, wobei der erste Hilfsmassenabschnitt durch eine erste Materialschwächung im ersten Spindelabschnitt begrenzt ist, die einen ersten elastischen Abschnitt bildet, wobei der zweite Hilfsmassenabschnitt durch eine zweite Materialschwächung im zweiten Spindelabschnitt begrenzt ist, die einen zweiten elastischen Abschnitt bildet, wobei der erste Hilfsmassenabschnitt und die erste Materialschwächung einer ersten Dämpfungseinheit zugeordnet sind, wobei der zweite Hilfsmassenabschnitt und die zweite Materialschwächung einer zweiten Dämpfungseinheit zugeordnet sind, und wobei der erste Hilfsmassenabschnitt und der zweite Hilfsmassenabschnitt einander zugewandt sind und gemeinsam vom Hohlprofilabschnitt umschlossen sind.

Auf diese Weise können die Hilfsmassenabschnitte und die elastischen Abschnitte integrale Bestandteile der Spindelabschnitte bilden. Der Aufwand zur Herstellung der mit der Dämpfungseinrichtung versehenen Spindel kann weiter reduziert werden.

Gemäß einer weiteren Ausgestaltung ist der Dämpfungsabschnitt als Hohlraum zur Aufnahme eines Dämpfungsfluids ausgebildet, wobei der Hohlraum durch den zumindest einen Hilfsmassenabschnitt und den Hohlprofilabschnitt begrenzt ist. Vorzugsweise wird ein durch den Hohlprofilabschnitt gebildeter Innenraum, der nicht durch den zumindest einen Hilfsmassenabschnitt und den zumindest einen elastischen Abschnitt ausgefüllt ist, als Hohlraum zur Ausbildung des Dämpfungsabschnitts betrachtet. Der sich ergebende übrige Hohlraum im Hohlprofilabschnitt kann mit dem Dämpfungsfluid gefüllt werden. Das Dämpfungsfluid kann Eigenbewegungen und/oder Relativbewegungen der im Hohlprofilabschnitt aufgenommenen Elemente dämpfen. Der Dämpfungsabschnitt kann allgemein als Dämpfungsspalt bezeichnet werden.

Vorzugsweise weist der Hohlprofilabschnitt zumindest eine dichtend verschließbare Zuführöffnung für das Dämpfungsfluid auf. Hierbei kann es sich etwa um einen Stopfen oder eine ähnliche verschließbare Öffnung handeln.

Weiter bevorzugt weist zumindest ein Hilfsmassenabschnitt eine Aufnahme zur Aufnahme des Ausgleichselements für das Dämpfungsfluid auf. Auf diese Weise kann auch das Ausgleichselement im durch den Hohlprofilabschnitt definierten Innenraum aufgenommen werden.

Gemäß einer weiteren Ausgestaltung ist der erste elastische Abschnitt durch einen ersten Einstich mit einem ersten Durchmesser gebildet, wobei der zweite elastische Abschnitt durch einen zweiten Einstich mit einem zweiten Durchmesser gebildet ist, und wobei sich der erste Durchmesser und der zweite Durchmesser voneinander unterscheiden. Auf diese Weise kann das Dämpfungsverhalten optimiert werden.

Es versteht sich, dass die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der vorliegenden Erfindung, definiert durch die beigefügten Ansprüche, zu verlassen.

Weitere Merkmale und Vorteile der Erfindung ergeben sich aus der nachfolgenden Beschreibung mehrerer bevorzugter Ausführungsbeispiele unter Bezugnahme auf die Zeichnungen. Es zeigen:
- Fig. 1: eine schematische frontale Ansicht einer Schleifmaschine, die als spitzenlose Schleifmaschine ausgestaltet ist;
- Fig. 2: eine stark vereinfachte schematische Teilansicht einer spitzenlosen Schleifmaschine in Draufsicht;
- Fig. 3: einen Längsschnitt durch eine Spindel einer Schleifmaschine, insbesondere eine Schleifspindel oder Regelspindel, die mit einer Dämpfungseinrichtung versehen ist;
- Fig. 4: eine perspektivische Ansicht eines Längsschnitts einer weiteren Ausgestaltung einer Spindel mit einer Dämpfungseinrichtung, insbesondere einer Schleifspindel oder einer Regelspindel;
- Fig. 5: ein Diagramm zur Veranschaulichung dynamischer Nachgiebigkeiten eines ersten Typs von Spindeln für Schleifmaschinen;
- Fig. 6: ein Diagramm zur Veranschaulichung dynamischer Nachgiebigkeiten eines zweiten Typs von Spindeln für Schleifmaschinen;
- Fig. 7: ein Diagramm zur Veranschaulichung einer impulsförmigen Anregung zur Erfassung des Ausschwingverhaltens eines Spindeltyps einer Schleifmaschine;
- Fig. 8: ein Diagramm zur Veranschaulichung einer Antwort einer konventionell gestalteten Spindel auf die anhand der Fig. 7 veranschaulichte impulsförmige Anregung; und
- Fig. 9: ein Diagramm zur Veranschaulichung einer Antwort einer mit einer Dämpfungseinrichtung versehenen Spindel auf die die anhand der Fig. 7 veranschaulichte impulsförmige Anregung.

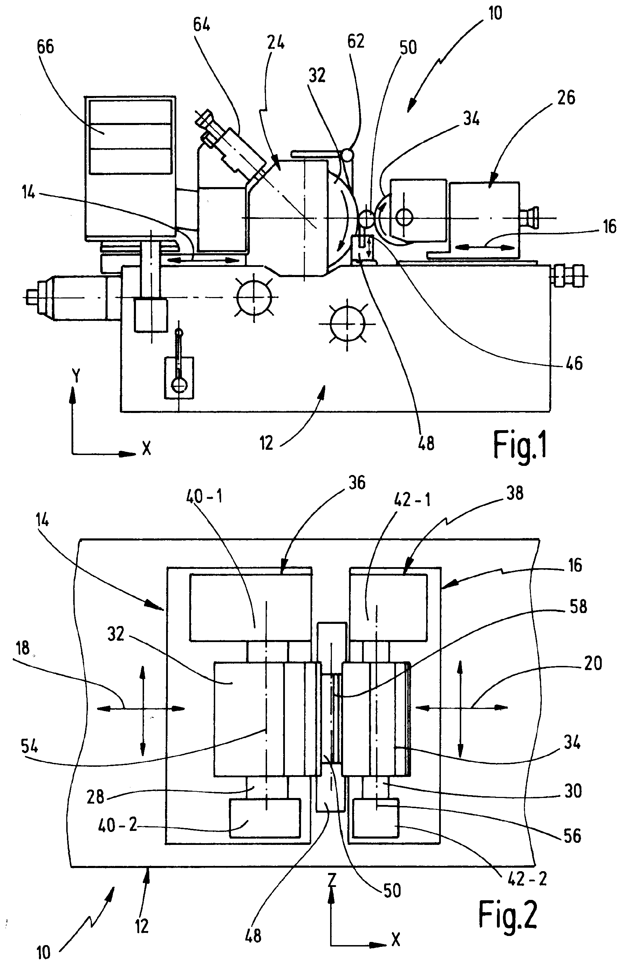

Fig. 1 veranschaulicht eine frontale Ansicht einer Schleifmaschine, die mit 10 bezeichnet ist. Mit Bezug auf Fig. 1 sowie mit ergänzendem Bezug auf Fig. 2, die eine schematische stark vereinfachte Teilansicht einer Schleifmaschine 10 in Draufsicht zeigt, werden nachfolgend der grundsätzliche Aufbau und wesentliche Komponenten der Schleifmaschine 10 beschrieben.

Die Schleifmaschine 10 kann insbesondere als sogenannte spitzenlose Schleifmaschine 10 ausgestaltet sein. Beispielhaft sind die anhand der Fig. 1 und 2 veranschaulichten Schleifmaschinen als spitzenlose Außenrundschleifmaschinen ausgebildet. Die Schleifmaschine 10 weist ein Maschinenbett 12 auf, das auch als Gestell bezeichnet werden kann. Am Maschinenbett 12 können Schlittenführungen 14, 16 aufgenommen sein, die Verfahrbewegungen von Komponenten der Schleifmaschine 10 ermöglichen.

In den Fig. 1 und 2 ist in Zusammenschau ein Koordinatensystem X-Y-Z entnehmbar, das zur Bezeichnung von Hauptrichtungen bzw. Hauptachsen der Schleifmaschine 10 verwendbar ist. Mit Z wird regelmäßig eine Achse bezeichnet, die etwa mit einer Längsachse eines an der Werkzeugmaschine 10 aufgenommenen Werkstücks zusammenfällt oder zumindest parallel zu dieser orientiert ist. Die Achse Z ist ferner parallel zu zumindest einer Spindelachse der Schleifmaschine 10 orientiert. Mit X wird regelmäßig eine Achse bezeichnet, die etwa auch als Zustellachse dienen kann. Üblicherweise ist die Achse X senkrecht zur Achse Z orientiert. Die Achse X wird allgemein auch als Arbeitsachse bezeichnet. Eine Achse Y bezeichnet allgemein eine Höhenerstreckung. Die Achse Y ist üblicherweise senkrecht zur Achse X und senkrecht zur Achse Z orientiert.

Die Schlittenführungen 14, 16 können als translatorische Führungen gestaltet sein und insbesondere Zustellbewegungen entlang der X-Achse erlauben. Die Schlittenführungen 14, 16 können jedoch auch als Kreuzschlittenführungen gestaltet sein. Demgemäß können die Schlittenführungen 14, 16 zusätzlich zur Bewegung entlang der X-Achse auch eine Bewegung entlang der Z-Achse erlauben. Die Z-Achse kann auch als Vorschubachse bezeichnet werden. Denkbare Bewegungsrichtungen, die durch die Schlittenführung 14, 16 ermöglicht werden, werden in Fig. 2 durch mit 18, 20 bezeichnete Pfeile angedeutet.

Die Schleifmaschine 10 kann ferner einen Schleifspindelstock 24 und einen Regelscheibenspindelstock 26 umfassen. Am Schleifspindelstock 24 kann eine Schleifspindel 28 drehbar aufgenommen sein. Am Regelscheibenspindelstock 26 kann eine Regelspindel 30 drehbar aufgenommen sein. Die Schleifspindel 28 kann zur Aufnahme zumindest einer Schleifscheibe 32 ausgebildet sein. Die Regelspindel 30 kann zur Aufnahme zumindest einer Regelscheibe 34 ausgebildet sein. Der Schleifspindelstock 24 kann ferner mit einem Schleifscheibenantrieb 36 versehen sein, zumindest aber mit einem entsprechenden Schleifscheibenantrieb 36 gekoppelt sein. Der Regelscheibenspindelstock 26 kann mit einem Regelscheibenantrieb 38 versehen sein, zumindest aber mit einem Regelscheibenantrieb 38 gekoppelt sein. Die Schlittenführung 14 ist dem Schleifspindelstock 24 zugeordnet. Die Schlittenführung 16 ist dem Regelscheibenspindelstock 26 zugeordnet. Die Schlittenführungen 14, 16 können mit geeigneten Antrieben gekoppelt sein, um translatorische Bewegungen des Schleifspindelstocks 24 bzw. des Regelscheibenspindelstocks 26 in einer X-Z-Ebene zu ermöglichen, vergleiche die mit 18, 20 bezeichneten Pfeile in Fig. 2.

Der Schleifscheibenantrieb 36 kann zumindest einen Motor, insbesondere einen Elektromotor, umfassen. Der Regelscheibenantrieb 38 kann zumindest einen Motor, insbesondere einen Elektromotor, umfassen. Der Schleifscheibenantrieb 36 kann direkt oder indirekt mit der Schleifspindel 28 koppelbar sein. Eine indirekte Kopplung kann etwa über ein Getriebe, eine Kupplung oder Ähnliches erfolgen. Der Regelscheibenantrieb 38 kann direkt oder indirekt mit der Regelspindel 30 gekoppelt sein. Eine indirekte Kopplung kann über ein Getriebe, eine Kupplung oder ähnliche zwischenschaltbare Elemente erfolgen.

Die Schleifspindel 28 kann zumindest eine Lagerung 40, vorzugsweise zwei Lagerstellen 40-1, 40-2 aufweisen, zwischen denen die Schleifscheibe 32 angeordnet ist, vergleiche Fig. 2. Die Regelspindel 30 kann zumindest eine Lagerung 42 aufweisen, vorzugsweise eine erste Lagerstelle 42-1 und eine zweite Lagerstelle 42-2. Zwischen den Lagerstellen 42-1, 42-2 kann die zumindest eine Regelscheibe 34 angeordnet sein, vergleiche insbesondere auch Fig. 2.

Zwischen der Schleifspindel 28 und der Regelspindel 30 ist eine Werkstückauflage 46 angeordnet, die an einer Werkstückauflagehalterung 48 aufgenommen ist. Die Werkstückauflage 46 ist zur Aufnahme bzw. Abstützung eines Werkstücks 50 ausgebildet, das zwischen der Schleifspindel 28 und der Regelspindel 30 zur schleifenden Bearbeitung aufnehmbar ist. Die Werkstückauflage 46 kann auch als Auflagelineal bezeichnet werden.

Die Schleifspindel 28 mit der daran aufgenommenen Schleifscheibe 42 ist um eine Längsachse 54 drehbar bzw. rotatorisch antreibbar. Die Regelspindel 30 mit der daran aufgenommenen Regelscheibe 34 ist um eine Längsachse 56 drehbar bzw. rotatorisch antreibbar. Die Schleifspindel 28 und die Regelspindel 30 können derart zusammenwirken, dass das zwischen diesen aufgenommene Werkstück 50 durch die Schleifscheibe 32 sowie die Regelscheibe 34 in Rotationen um seine Längsachse 58 versetzbar ist. Mit anderen Worten kann das Werkstück 50 indirekt über die Schleifscheibe 32 und die Regelscheibe 34 angetrieben werden. Wie einer Zusammenschau der Fig. 1 und 2 entnehmbar ist, können die Achsen 54, 56 und 58 in einer gemeinsamen X-Z-Ebene angeordnet sein. Insbesondere können die Achsen 54, 56, 58 zueinander parallel ausgerichtet sein. Wie vorstehend bereits erwähnt, ist es jedoch auch vorstellbar, dass zumindest die Regelspindel 30 bzw. deren Längsachse 56 leicht gegenüber der Längsachse 54 der Schleifspindel 28 geneigt bzw. winkelig zu dieser versetzt ist. Eine derartige Schrägstellung kann einen Vorschub des Werkstücks 50 bewirken. Dies kann insbesondere für sogenannte Durchgangsschleifvorgänge von Vorteil sein. Es kann nämlich auf diese Weise ein Werkstückvorschub bewirkt werden. Es versteht sich, dass ein Vorschub des Werkstücks 50 auch auf andere Weise bewerkstelligt werden kann. Allgemein kann die Schleifmaschine 10 auch zur Durchführung von Einstichschleifvorgängen ausgebildet sein. Es versteht sich ferner, dass auch die Werkstückauflage 46 bzw. die Werkstückauflagehalterung 48 mit einem eigenen Antrieb versehen sein kann.

Anhand der Darstellung gemäß Fig. 1 wird ferner ersichtlich, dass die Schleifscheibe 32 und die Regelscheibe 34 grundsätzlich mit einem gleichen Drehsinn rotatorisch antreibbar sind. Üblicherweise erfolgt ein rotatorischer Antrieb der Schleifscheibe 32 und der Regelscheibe 34 derart, dass sich an diesen unterschiedliche Umfangsgeschwindigkeiten ergeben. Eine resultierende Umfangsgeschwindigkeitsdifferenz kann eine Schlupf aufweisende Mitnahme des Werkstücks 50 durch die Schleifscheibe 32 und die Regelscheibe 34 bewirken. Grundsätzlich wird das Werkstück 50 durch die Schleifscheibe 32 und die Regelscheibe 34 in Rotationen versetzt, deren Drehsinn dem Drehsinn der Rotation der Schleifscheibe 32 und der Regelscheibe 34 entgegengesetzt ist. Aufgrund der unterschiedlichen Umfangsgeschwindigkeiten der Schleifscheibe 32 und der Regelscheibe 34 erfolgt jedoch keine "ideale" schlupffreie Mitnahme. Vielmehr kann sich etwa zwischen den Werkstücken 50 und der Schleifscheibe 32 eine Relativbewegung, insbesondere eine gleitende Relativbewegung, ergeben. Diese Relativbewegung sorgt für den Materialabtrag am Werkstück 50.

Durch geeignete Ansteuerung von Schlittenantrieben (in den Fig. 1 und 2 nicht separat gezeigt) zumindest des Schleifspindelstocks 24 oder des Regelscheibenspindelstocks 26 kann ferner eine Zustellkraft bzw. Anpresskraft in der X-Richtung auf das Werkstück 50 definiert und erzeugt werden. Mit anderen Worten wird das Werkstück 50 zwischen der Schleifscheibe 32 und der Regelscheibe 34 eingeklemmt, insbesondere mit einer Vorspannung eingeklemmt. Es hat sich gezeigt, dass im Betrieb der Schleifmaschine 10 dynamische Nachgiebigkeiten der Schleifspindel 28 und/oder der Regelspindel 30 auftreten können. Diese dynamischen Nachgiebigkeiten können sich im Verbund mit der Anpresskraft nachteilig auf die Bearbeitungsgenauigkeit auswirken. Ferner können damit einhergehende dynamische Effekte zu einem vorzeitigen Verschleiß der Schleifscheibe 32 oder der Regelscheibe 34 führen. Ferner kann eine erhöhte Belastung der Lagerungen 40, 42 damit einhergehen. Es ist daher von Vorteil, zumindest die Schleifspindel 28 oder die Regelspindel 30 mit einer Bedämpfung, insbesondere mit einer Dämpfungseinrichtung, zu versehen, um eine höhere dynamische Steifigkeit zu ermöglichen.

Beispielhaft kann die Schleifmaschine 10 ferner eine Zuführung 62 für ein Kühlschmiermittel (KSS-Zuführung) aufweisen. Ferner kann insbesondere dem Schleifspindelstock 24 eine Abrichteinrichtung 64 zum Abrichten der Schleifscheibe 32 zugeordnet sein. Die Schleifmaschine 10 kann mit einer Steuereinrichtung 66 versehen sein, über die ein Bediener die Schleifmaschine 10 bedienen und betreiben kann. Es versteht sich, dass die Steuereinrichtung 66 auch zur automatisierten Steuerung der Schleifmaschine 10 ausgestaltet sein kann.

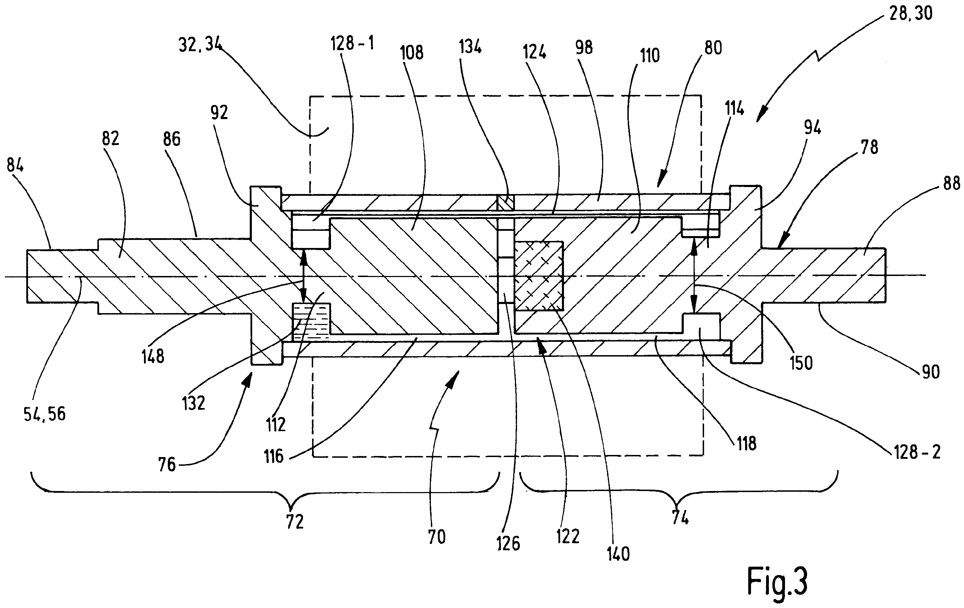

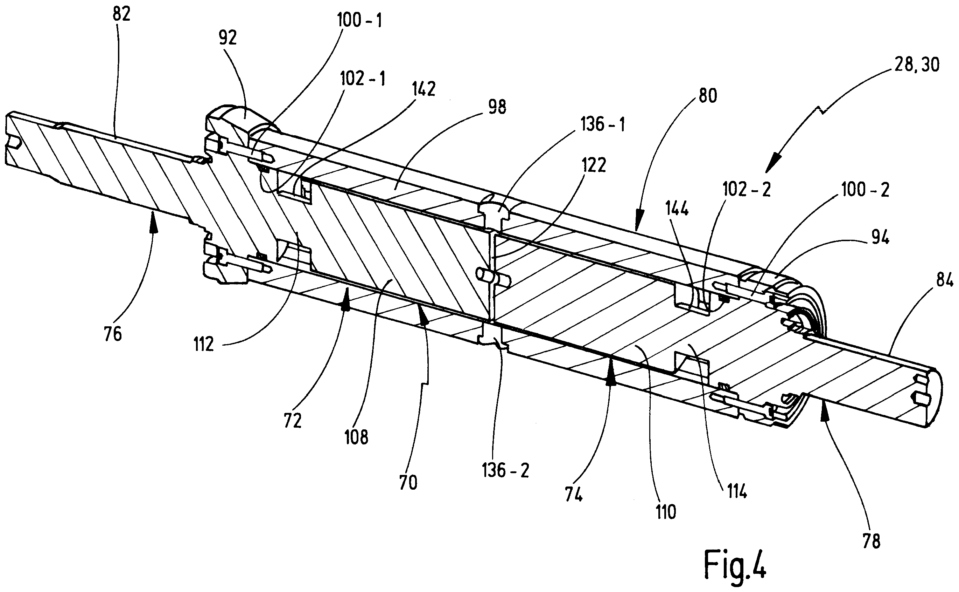

Nachfolgend wird anhand der Fig. 3 und der Fig. 4 eine mögliche Gestaltung einer Spindel veranschaulicht, die grundsätzlich als Schleifspindel 28 oder als Regelspindel 30 verwendbar ist und in vorteilhafter Weise mit einer Dämpfungseinrichtung 70 zur Reduktion dynamischer Nachgiebigkeiten versehen ist. Fig. 3 zeigt einen Längsschnitt durch eine Spindel, die als Schleifspindel 28 oder Regelspindel 30 verwendbar ist (nachfolgend einheitlich als Spindel 28, 30 bezeichnet). Fig. 4 veranschaulicht eine perspektivische Schnittansicht einer grundsätzlich ähnlich gestalteten Spindel 28, 30 in einem Längsschnitt.

Es ist bevorzugt, die Spindel 28, 30 mit einer Dämpfungseinrichtung 70 zu versehen, die zumindest eine Dämpfungseinheit 72, 74 aufweist. Insbesondere kann die Dämpfungseinrichtung 70 eine erste Dämpfungseinheit 72 und eine zweite Dämpfungseinheit 74 aufweisen. Die erste Dämpfungseinheit 72 kann einem ersten Spindelabschnitt 76 zugeordnet sein. Die zweite Dämpfungseinheit 74 kann einem zweiten Spindelabschnitt 78 zugeordnet sein. Zwischen den Spindelabschnitten 76, 78 kann sich ein Hohlprofilabschnitt 80 erstrecken. Die Spindelabschnitte 76, 78 können über den Hohlprofilabschnitt 80 miteinander verbunden sein. Insbesondere ist es bevorzugt, wenn zwischen den Spindelabschnitten 76, 78 keine direkte, unmittelbare Verbindung (mechanischer Art) existiert. Hingegen ist es von Vorteil, wenn die mechanische Verbindung zwischen dem ersten Spindelabschnitt 76 und dem zweiten Spindelabschnitt 78 über den Hohlprofilabschnitt 80 bewirkt wird, der sich zwischen diesen erstreckt.

Der erste Spindelabschnitt 76 kann einen Zapfen 82 aufweisen. Der Zapfen 82 kann ein Lagerstück 84 sowie einen Mitnahmeabschnitte 86 aufweisen. Am Lagerstück 84 kann der erste Zapfen 82 gelagert werden, vergleiche die Lagerungen 40, 42 in Fig. 2. Am Mitnahmeabschnitt 86 kann der Zapfen 82 rotatorisch um seine Längsachse 54, 56 angetrieben werden. Auf diese Weise kann die Spindel 28, 30 in Drehungen um ihre Längsachse 54, 56 versetzt werden. Der zweite Spindelabschnitt 78 weist einen Zapfen 88 auf, der ein Lagerstück 90 umfassen kann. Der Zapfen 88 kann über das Lagerstück 90 mit einer Lagerung 40, 42 gekoppelt sein, vergleiche Fig. 2. Jeder der beiden Spindelabschnitte 76, 78 kann eine Lagerstelle für die Spindel 28, 30 bereitstellen, so dass diese an ihren beiden Enden lagerbar ist.

Der erste Spindelabschnitt 76 weist ferner einen Bund oder Kragen 92 auf, der sich an dem Zapfen 82 anschließt. Der zweite Spindelabschnitt 78 weist in ähnlicher Weise einen Bund oder Kragen 94 auf, der sich an den Zapfen 88 anschließt. Insbesondere können die Spindelabschnitte 76, 78 über die Kragen 92, 94 mit dem Hohlprofilabschnitt 80 gekoppelt werden. Beispielhaft ist der Hohlprofilabschnitt 80 als Rohrprofil 98 ausgebildet, vergleiche auch Fig. 4. Das Rohrprofil 98 ist stirnseitig jeweils mit dem ersten Spindelabschnitt 76 und dem zweiten Spindelabschnitt 78 gekoppelt. Zu diesem Zweck kann der jeweilige Kragen 92, 94 eine diesem zugewandte Stirnfläche des Rohrprofils 98 kontaktieren.

Zur Fixierung der Spindelabschnitte 76, 78 mit dem Hohlprofilabschnitt 80 bzw. dem Rohrprofil 98 können Befestigungselemente 100 vorgesehen sein, die etwa eine kraftschlüssige Befestigung erlauben. Beispielhaft sind in Fig. 4 Befestigungselemente 100-1, 100-2 in Form von Schrauben angedeutet. Es wäre grundsätzlich auch vorstellbar, die Spindelabschnitte 76, 78 stoffschlüssig mit dem Hohlprofilabschnitt 80 zu koppeln. Eine stoffschlüssige Kopplung kann etwa Schweißen, Löten, Kleben oder Kombinationen davon umfassen. Es wäre auch vorstellbar, den Verbund aus den Spindelabschnitten 76, 78 und dem Hohlprofilabschnitt 80 stoffschlüssig und kraftschlüssig zu sichern. Zu diesem Zweck könnte die Anbindung etwa über die Befestigungselemente 100 sowie eine Adhäsionsschicht oder Klebeschicht erfolgen.

Es ist ferner von Vorteil, wenn die Anbindung der Spindelabschnitte 76, 78 an den Hohlprofilabschnitt 80 dichtend erfolgt. Mit anderen Worten ist es wünschenswert, dass die Spindelabschnitte 76, 78 bzw. deren Kragen 92, 94 dicht am Hohlprofilabschnitt 80 aufgenommen sind, insbesondere fluiddicht. Zu diesem Zweck können Dichtungen oder Dichtringe 102 vorgesehen sein, die etwa an den Spindelabschnitten 76, 78 oder am Hohlprofilabschnitt 80 aufgenommen sind. In Fig. 4 sind entsprechende Dichtringe 102-1, 102-2 angedeutet, die an den Spindelabschnitten 76, 78 aufgenommen sind und in den Hohlprofilabschnitt 80 einschiebbar sind, um dem Verbund zwischen dem Hohlprofilabschnitt 80 und den Spindelabschnitten 76, 78 abzudichten. Bei den Dichtringen 102-1, 102-2 handelt es sich um radial wirkende Dichtringe. Es wäre jedoch auch vorstellbar, axial wirkende Dichtringe zu verwenden und diese insbesondere mit einander gegenüberliegenden Stirnflächen des Hohlprofilabschnitts 80 und des Kragens 92, 94 der Spindelabschnitte 76, 78 zu koppeln.

Wie vorstehend bereits dargelegt, weist die Spindel 28, 30 eine Dämpfungseinrichtung 70 mit zumindest einer Dämpfungseinheit 72, 74 auf. Dies heißt mit anderen Worten, es sind Gestaltungen denkbar, bei denen lediglich einem Spindelabschnitt 76, 78 eine Dämpfungseinheit 72, 74 zugeordnet ist. Gleichwohl ist es zumindest in einigen Ausgestaltungen bevorzugt, wenn jeder der beiden Spindelabschnitte 76, 78 mit einer entsprechenden Dämpfungseinheit 72, 74 gekoppelt bzw. mit dieser versehen ist. Jede Dämpfungseinheit 72, 74 kann einen Hilfsmassenabschnitt 108, 110, einen elastischen Abschnitt 112, 114 und einen Dämpfungsabschnitt 116, 118 aufweisen. Beispielhaft kann die erste Dämpfungseinheit 72 einen ersten Hilfsmassenabschnitt 108, einen ersten elastischen Abschnitt 112 und einen ersten Dämpfungsabschnitt 116 aufweisen. Gleichermaßen kann die zweite Dämpfungseinheit 74 einen zweiten Hilfsmassenabschnitt 110, einen zweiten elastischen Abschnitt 114 und einen zweiten Dämpfungsabschnitt 118 aufweisen.

Der zumindest eine Dämpfungsabschnitt 116, 118 kann im Wesentlichen durch einen Hohlraum 122 gebildet sein, der sich zwischen dem Hohlprofilabschnitt 80 und den darin aufgenommenen Elementen der Spindelabschnitte 76, 78 ergibt. Der Hohlraum 122 kann demgemäß etwa durch einen Umfangsspalt 122 zwischen einer Innenwand des Hohlprofilabschnitts 80 und einem Außenumfang des zumindest einen Hilfsmassenabschnitts 108, 110 gebildet sein. Ferner kann der Hohlraum 122 einen Axialspalt 126 umfassen, der sich zwischen stirnseitigen Frontalflächen der Hilfsmassenabschnitte 108, 110 ergeben kann. Ferner kann der Hohlraum 122 zumindest einen Ringspalt 128 umfassen, der den zumindest einen elastischen Abschnitt 112, 114 umgibt. Der Gestaltung gemäß Fig. 3 kann entnommen werden, dass ein erster Ringspalt 128-1 einen ersten elastischen Abschnitt 112 und ein zweiter Ringspalt 128-2 einen zweiten elastischen Abschnitt 114 zugeordnet sein kann. Gemeinsam können der Umfangsspalt 124, der Axialspalt 126 und der zumindest eine Ringspalt 128 den Hohlraum 122 definieren.

Im Hohlraum 122 kann der zumindest eine Dämpfungsabschnitt 116, 118 ausgebildet sein. Vorzugsweise ist der zumindest eine Dämpfungsabschnitt 116, 118 mit einem Dämpfungsfluid 132 befüllt (in Fig. 3 lediglich abschnittsweise angedeutet). Vorzugsweise ist der den zumindest einen Dämpfungsabschnitt 116, 118 bildende Hohlraum 122 vollständig oder nahezu vollständig mit dem Dämpfungsfluid 132 befüllt. Bei dem Dämpfungsfluid 132 handelt es sich vorzugsweise um ein Silikonöl. Gleichwohl sind andere Dämpfungsfluide vorstellbar. Allgemein ist es bevorzugt, wenn das Dämpfungsfluid eine kinematische Viskosität aufweist, die an ein gewünschtes Dämpfungsverhalten der Dämpfungseinrichtung 70 angepasst ist. Bei dem anhand der Fig. 3 und 4 veranschaulichten Beispiel kommt beispielhaft ein Dämpfungsfluid in Form eines Silikonöls zur Verwendung, das eine kinematische Viskosität von ungefähr 100 mm²/s aufweist.

Gemeinsam können der zumindest eine Hilfsmassenabschnitt 108, 110, der zumindest eine elastische Abschnitt 112, 114 und der zumindest eine (mit dem Dämpfungsfluid 132 befüllte) Dämpfungsabschnitt 116, 118 ein gedämpftes schwingfähiges System bilden. Dem Dämpfungsfluid 132 im Dämpfungsabschnitt 116, 118 kommt die Aufgabe zu, Bewegungsenergie bzw. Schwingungsenergie aus dem System abzuführen. Dies kann etwa durch Umwandlung in thermische Energie erfolgen.

Der Hohlraum 122 kann durch zumindest eine Öffnung 134 im Hohlprofilabschnitt 80 befüllbar sein, vergleiche Fig. 3. Die zumindest eine Öffnung 134 kann durch ein Verschlusselement 136 verschließbar sein, vergleiche etwa ein erstes Verschlusselement 136-1 und ein zweites Verschlusselement 136-2 in Fig. 4. Bei dem zumindest einen Verschlusselement 136 kann es sich etwa um einen Stopfen oder um eine Verschlussschraube handeln. Es ist bevorzugt, wenn der Hohlraum 122 dichtend abschließbar ist. Insbesondere ist es bevorzugt, wenn der Hohlraum 122 fluiddicht oder gasdicht abschließbar ist. Auf diese Weise wird sichergestellt, dass das Dämpfungsfluid 132 nicht aus dem Hohlraum 122 entweichen kann. Ebenso wird sichergestellt, dass kein wesentlicher Druckausgleich mit der Umgebung im Falle einer Zunahme des Drucks des Dämpfungsfluids 132 erfolgt.

Vielmehr ist es bevorzugt, wenn Füllstandsschwankungen und/oder Druckschwankungen beim Dämpfungsfluid 132 durch ein Ausgleichselement 140 kompensiert werden, das ebenso wie die Dämpfungseinheiten 72, 74 im Hohlprofilabschnitt 80 aufgenommen sein kann. Beispielhaft ist das Dämpfungselement 140 in Fig. 3 in eine axiale Stirnfläche des Hilfsmassenabschnitts 110 eingebracht. Es ist vorstellbar, sowohl im ersten Hilfsmassenabschnitt 108 als auch im zweiten Hilfsmassenabschnitt 110, etwa in deren einander zugewandten axialen Stirnflächen, jeweils ein Dämpfungselement 140 aufzunehmen. Andere Ausgestaltungen oder Anordnungen des Dämpfungselements 140 innerhalb des Hohlprofilabschnitts 80 sind denkbar. Vorzugsweise ist das Dämpfungselement 140 hinreichend elastisch, insbesondere hinreichend kompressibel. Beispielhaft kann das Dämpfungselement 140 dazu ausgestaltet sein, bei einer Druckzunahme oder Volumenzunahme des Dämpfungsfluids 132 im Hohlraum 122 deformiert, insbesondere komprimiert zu werden, um dem sich ausbreitenden Dämpfungsfluid 132 genügend Raum zur Verfügung zu stellen. Auf diese Weise kann ein übermäßiger Druckanstieg beim Dämpfungsfluid 132 im Hohlraum 122 vermieden werden. Dies kann etwa im Falle eines Temperaturanstiegs in dem zumindest einen durch den Hohlraum 122 gebildeten Dämpfungsabschnitt 116, 118 von Vorteil sein.

Vorzugsweise ist das zumindest eine Ausgleichselement 140 durch einen elastomeren Wirkstoff gebildet. Insbesondere bieten sich Moosgummiwerkstoffe oder moosgummiartige Werkstoffe an. Es ist besonders bevorzugt, wenn es sich bei dem zumindest einen Ausgleichselement 140 um ein Fluormoosgummi auf Basis eines Fluor¬elastomers handelt.

Der zumindest eine Hilfsmassenabschnitt 108, 110 kann als im Wesentlichen zylindrisch gestaltetes Massestück ausgeführt sein, das sich im Wesentlichen entlang der Längsachse 54, 56 erstreckt. Das zumindest eine Massestück 108, 110 kann über den zumindest einen elastischen Abschnitt 112, 114 an den jeweiligen Spindelabschnitt 76, 78 angebunden sein. Der zumindest eine elastische Abschnitt 112, 114 kann etwa durch eine Materialschwächung 142, 144 im jeweiligen Spindelabschnitt 76, 78 erzeugt sein. Durch die Schwächung des Materials in den elastischen Abschnitten 112, 114 kann die Nachgiebigkeit der Spindelabschnitte 76, 78 erhöht werden. Auf diese Weise kann die Schwingungsfähigkeit der Hilfsmassenabschnitte 108, 110 erhöht werden. Schwingungen der Hilfsmassenabschnitte 108, 110 können verschiedene Schwingungsformen annehmen. Beispielhaft sind Torsionsschwingungen um die Längsachse 54, 56 denkbar. Ebenso sind Biegeschwingungen denkbar, bei denen der zumindest eine Hilfsmassenabschnitt 108, 110 zur Längsachse 54, 56 leichte Schrägstellungen einnimmt. Auslenkungen können in Richtung der X-Achse und in Richtung der Y-Achse erfolgen. Üblicherweise liegen jedoch komplexe Schwingungsformen vor, die etwa Kombinationen von Längsschwingungen, Torsionsschwingungen und/oder Biegeschwingungen darstellen können.

Die Dämpfungscharakteristik der Dämpfungseinrichtung 70 kann durch geeignete Abstimmung des zumindest einen Hilfsmassenabschnitts 108, 110, des zumindest einen elastischen Abschnitts 112, 114 und des zumindest einen Dämpfungsabschnitts 116, 118 - insbesondere von dessen Befüllung mit dem Dämpfungsfluid 132 - in gewünschter Weise beeinflusst werden. Die Masse des zumindest einen Hilfsmassenabschnitts 108, 110 kann im Wesentlichen über dessen äußere Geometrie beeinflusst werden. Die Elastizität des zumindest einen elastischen Abschnitts 112, 114 kann etwa durch dessen axiale Erstreckung sowie durch Variation des nach der Materialschwächung verbliebenen Querschnitts 142, 144 beeinflusst werden. Beispielhaft kann nach der Einbringung der Materialschwächung 142, 144 beim ersten elastischen Abschnitt 112 ein erster Durchmesser 148 verbleiben. Beispielhaft kann nach der Materialschwächung 144 beim zweiten elastischen Abschnitt 114 ein zweiter Durchmesser 150 verbleiben, vergleiche Fig. 3.

Die Durchmesser 148, 150 können in geeigneter Weise aufeinander abgestimmt werden, um die Dämpfungseigenschaften der Dämpfungseinrichtung 70 günstig zu beeinflussen. Beispielhaft kann in dem anhand der Fig. 3 und 4 veranschaulichten Ausführungsbeispiel der erste elastische Abschnitt 112 einen ersten Durchmesser 148 von etwa 35 mm aufweisen. Ferner kann der zweite elastische Abschnitt 114 einen zweiten Durchmesser 150 von etwa 40 mm aufweisen. Die Durchmesser 148, 150 können allgemein auch als Abstimmdurchmesser bezeichnet werden. Eine Gestaltung der elastischen Abschnitte 112, 114 mit unterschiedlichen Abstimmdurchmessern kann sich günstig auf eine gewünschte Breitbandigkeit der Dämpfung auswirken.

Es versteht sich, dass die Spindelabschnitte 76, 78 und der Hohlprofilabschnitt 80 im Wesentlichen aus üblichen Werkstoffen, insbesondere aus üblichen Stahlwerkstoffen gefertigt sein können, die grundsätzlich auch zur Herstellung von Spindeln konventioneller Bauart genutzt werden können. In den Fig. 3 und 4 sind die Spindelabschnitte 76, 78 jeweils als einstückige oder im Wesentlichen einstückige Bauelemente dargestellt, die zumindest den Hilfsmassenabschnitt 108, 110 und den elastischen Abschnitt 112, 114 in sich integrieren. Auf diese Weise kann etwa die Montage der Spindel 28, 30 vereinfacht werden. Gleichwohl ist es vorstellbar, dass die Spindelabschnitte 76, 78 alternativ auch als "gebaute" Spindelabschnitte gestaltet sein können. Vorstellbar wäre es etwa, zumindest den jeweiligen Hilfsmassenabschnitt 108, 110 oder den jeweiligen elastischen Abschnitt 112, 114 als separates Bauteil auszuführen und in geeigneter Weise mit dem Spindelabschnitt 76, 78 zu einem Verbund zu fügen.

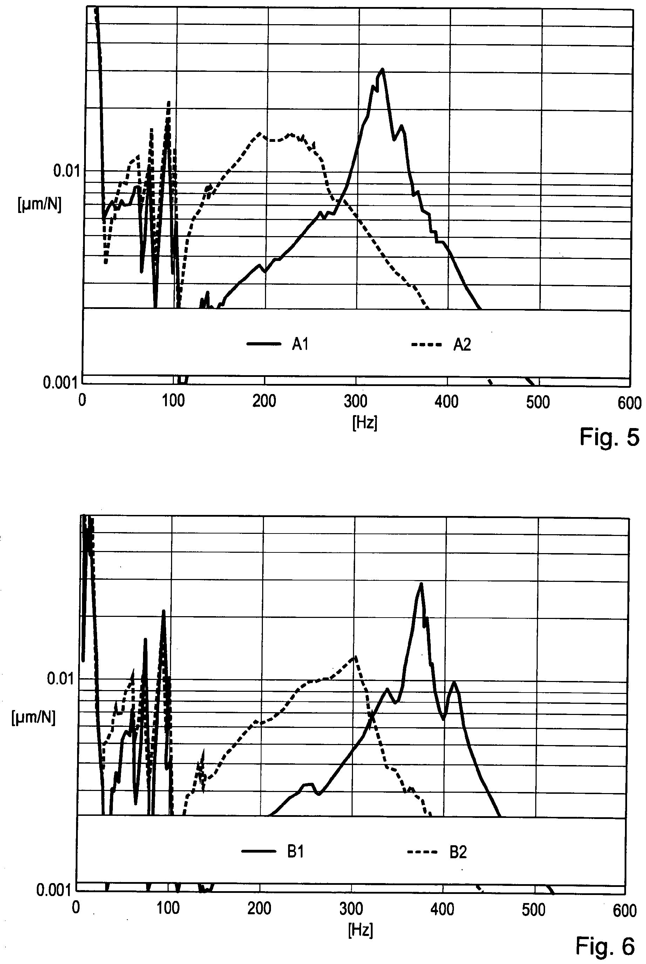

Nachfolgend werden anhand der Fig. 5 bis 9 funktionale Vorteile der Gestaltung von Spindeln mit Dämpfungseinrichtungen veranschaulicht, die zumindest gemäß einigen Aspekten der vorliegenden Offenbarung gestaltet sind. Die Fig. 5 bis 9 beziehen sich teilweise auf beispielhafte Regelspindeln, die mit einer Dämpfungseinrichtung gemäß des anhand der Fig. 3 und 4 veranschaulichten Ausführungsbeispiels versehen sind. Als Referenz dient insbesondere eine Regelspindel konventioneller Bauart, die vergleichbare Abmessungen aufweist bzw. mit einer vergleichbaren Regelscheibe versehen ist.

Die Fig. 5 und 6 veranschaulichen dynamische Nachgiebigkeiten der Regelspindel in einer Arbeitsrichtung, die mit der X-Richtung zusammenfällt. Die Arbeitsrichtung X ist regelmäßig senkrecht zur Längsachse der Regelspindel orientiert. Auf der Abszisse ist jeweils eine Frequenz in Hz (Hertz) aufgetragen. Auf der Ordinate ist eine Nachgiebigkeit in µm/N (Mikrometer pro Newton) ausgetragen. Die Ordinate weist einen logarithmischen Maßstab auf.

In Fig. 5 veranschaulicht ein mit A1 bezeichneter Graph die dynamische Nachgiebigkeit einer Regelspindel mit einem Regelscheibendurchmesser von 350 mm (Millimeter), die einer konventionellen Bauart entspricht, also nicht mit einer Dämpfungseinrichtung gemäß zumindest einigen Aspekten der vorliegenden Offenbarung versehen ist. Demgegenüber veranschaulicht ein mit A2 bezeichneter Graph die dynamische Nachgiebigkeit einer Regelspindel, die ebenso eine Regelscheibe mit einem Durchmesser von 350 mm aufweist und ferner mit einer Dämpfungseinrichtung versehen ist, die den anhand der Fig. 3 und 4 veranschaulichten Ausführungsbeispielen zumindest ähnlich gestaltet ist. Es zeigt sich, dass die absolute dynamische Nachgiebigkeit durch den Einsatz der Dämpfungseinrichtung um etwa 50 % reduziert worden ist. Ferner kann der Fig. 5 entnommen werden, dass ein Nachgiebigkeitsmaximum (etwa bei 324 Hz) der ungedämpften Spindel durch den Einsatz der Dämpfungseinrichtung zu deutlich niedrigeren Frequenzen verschoben worden ist. Ferner wird ersichtlich, dass der die Nachgiebigkeit der bedämpften Spindel widerspiegelnde Graph A2 im relevanten Bereich deutlich flacher ist.

In Fig. 6 veranschaulicht ein mit B1 bezeichneter Graph die dynamische Nachgiebigkeit einer Regelspindel, die mit einer Regelscheibe mit einem Durchmesser von 290 mm versehen ist und nicht mit einer Dämpfungseinrichtung gemäß der vorliegenden Offenbarung ausgestattet ist. Demgegenüber veranschaulicht ein mit B2 bezeichneter Graph die dynamische Nachgiebigkeit einer Regelspindel, die ebenso mit einer Regelscheibe mit einem Durchmesser von 290 mm versehen ist, wobei die Regelspindel ferner mit einer Dämpfungseinrichtung gemäß zumindest einigen Aspekten der vorliegenden Offenbarung ausgerüstet ist. Auch der Darstellung gemäß Fig. 6 ist entnehmbar, dass einerseits ein Nachgiebigkeitsmaximum um über 50 % reduziert worden ist. Ferner wird ersichtlich, dass die Frequenz, bei der bei einer konventionellen Regelspindel das Maximum auftritt (in Fig. 6 ungefähr 372 Hz beim Graphen B1), durch den Einsatz einer offenbarungsgemäßen Dämpfungseinrichtung hin zu deutlich niedrigeren Frequenzen verschoben werden kann. Schließlich zeigt auch Fig. 6, dass die Kurve der dynamischen Nachgiebigkeit für die bedämpfte Spindel B2 weniger spitz als die entsprechende Kurve B1 für die unbedämpfte Spindel ist.

Insbesondere ist es bevorzugt, dass die anhand der Fig. 5 und 6 nachgewiesene Dämpfungswirkung mit Spindeln erzielbar ist, die mit der gleichen Dämpfungseinrichtung versehen sind. Mit anderen Worten ist es bevorzugt, die Dämpfungseinrichtung derart "breit" abzustimmen, dass unabhängig vom aktuellen Durchmesser der gewählten Regelscheibe eine deutliche Verbesserung der dynamischen Nachgiebigkeit realisierbar ist.

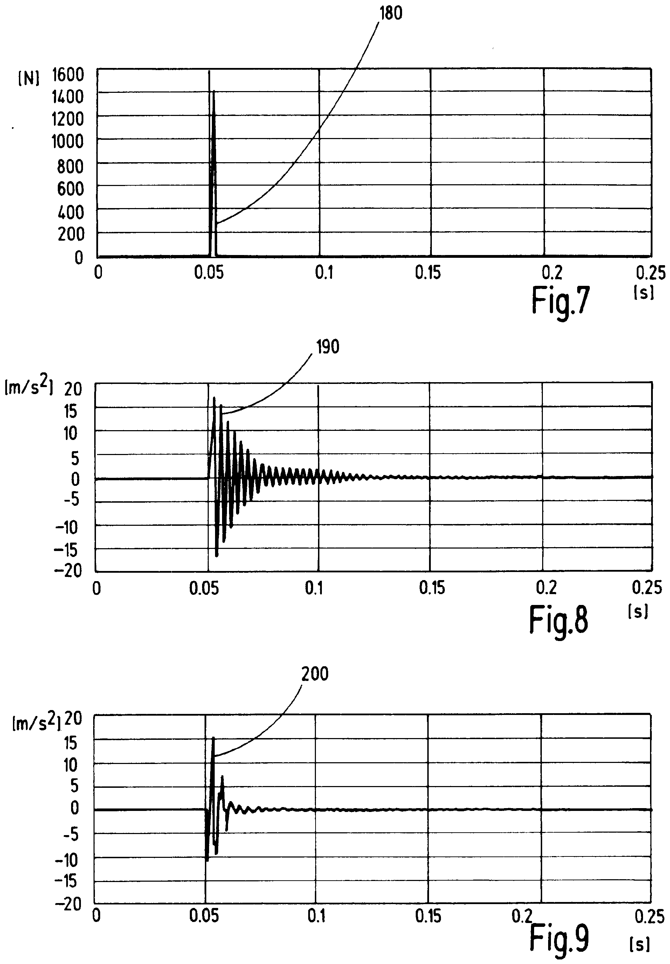

Anhand der Fig. 7, 8 und 9 wird das Ausschwingverhalten verschiedener Spindeln, insbesondere verschiedener Regelspindeln nach einer impulsförmigen Anregung in der Arbeitsrichtung (X-Richtung) veranschaulicht. In den Fig. 7, 8 und 9 zeigt die Abszisse jeweils einen Zeitverlauf in s (Sekunden).

Fig. 7 veranschaulicht anhand eines mit 180 bezeichneten Graphen den zeitlichen Verlauf der impulsförmigen Anregung. Die Ordinate der graphischen Darstellung gemäß Fig. 7 veranschaulicht die einwirkende Kraft in N (Newton). Bei einem Zeitpunkt 0.05 s erfolgt eine nahezu ideale impulsförmige Anregung mit einer Kraft von über 1400 N. Die impulsförmige Anregung erfolgt sowohl bei einer Regelspindel nach konventioneller Bauart, die ohne offenbarungsgemäße Dämpfungseinrichtung ausgestaltet ist, vergleiche Fig. 8. Ferner erfolgt die Anregung bei einer Regelspindel, die mit einer Dämpfungseinrichtung versehen ist, die in wesentlichen Aspekten der anhand der Fig. 3 und 4 veranschaulichten Ausgestaltungen entsprechen kann, vergleiche Fig. 9. Die Fig. 8 und 9 veranschaulichen die entsprechende Impulsantwort.

In den Fig. 8 und 9 zeigt die Ordinate eine als Reaktion auf die impulsförmige Anregung auftretende Beschleunigung in der X-Richtung (Arbeitsrichtung) in m/s². Ein in Fig. 8 mit 190 bezeichneter Graph zeigt, dass die konventionelle Regelspindel sehr lange zum Ausschwingen braucht. Insbesondere treten zumindest im Bereich zwischen 0.05 s und 0.1 s deutlich sichtbare Nachschwingungen auf. Demgegenüber veranschaulicht in Fig. 9 ein mit 200 bezeichneter Graph, dass die mit der Dämpfungseinrichtung versehene Regelspindel eine deutlich höhere Eigendämpfung aufweist. Bereits nach wenigen Amplituden ist die Spindel nahezu vollständig ausgeschwungen. Bei einer Zeit von 0.1 s sind nahezu keine Schwingungen mehr wahrnehmbar.

## Patentansprüche

1. Spitzenlose Schleifmaschine (10), mit einem Maschinenbett (12), einer Schleifspindel (28), die mit einem Spindelantrieb (36) koppelbar ist und zur Aufnahme einer Schleifscheibe (32) ausgebildet ist, einer Regelspindel (30), die mit einem Spindelantrieb (38) koppelbar ist und zur Aufnahme einer Regelscheibe (34) ausgebildet ist, einer Werkstückauflage (46) zur Aufnahme eines zu bearbeitenden Werkstücks (50) zwischen der Schleifspindel (28) und der Regelspindel (30), wobei die Schleifspindel (28) und die Regelspindel (30) am Maschinenbett (12) gelagert sind und relativ zueinander verfahrbar sind, **dadurch gekennzeichnet, dass** zumindest die Schleifspindel (28) oder die Regelspindel (30) als Spindel mit einer integrierten Dämpfungseinrichtung (70) ausgebildet ist, wobei die Dämpfungseinrichtung (70) zumindest eine Dämpfungseinheit (72, 74) mit einem Hilfsmassenabschnitt (108, 110), einem elastischen Abschnitt (112, 114) und einem Dämpfungsabschnitt (116, 118) aufweist, die in die Spindel (28, 30) integriert sind und die gemeinsam ein gedämpftes schwingungsfähiges System zur Erhöhung der dynamischen Steifigkeit der Spindel (28, 30) bilden.

2. Schleifmaschine (10) nach Anspruch 1, **dadurch gekennzeichnet, dass** der Hilfsmassenabschnitt (108, 110), der elastische Abschnitt (112, 114) und der Dämpfungsabschnitt (116, 118) in einem Hohlprofilabschnitt (80), insbesondere einem Rohrprofil (98), der Spindel (28, 30) aufgenommen sind.

3. Schleifmaschine (10) nach einem der vorhergehenden Ansprüche, **dadurch gekennzeichnet, dass** der Dämpfungsabschnitt (116, 118) zumindest einen Hohlraum (122) aufweist, der mit einem Dämpfungsfluid (132), insbesondere einem viskosen Dämpfungsfluid befüllbar ist, und wobei das Dämpfungsverhalten der Dämpfungseinrichtung (70) vorzugsweise durch Wahl einer Viskosität des Dämpfungsfluids (132) beinflussbar ist.

4. Schleifmaschine (10) nach Anspruch 3, **dadurch gekennzeichnet, dass** das Dämpfungsfluid (132) ein Silikonöl ist, insbesondere ein Silikonöl mit einer kinematischen Viskosität im Bereich von ungefähr 50 mm²/s bis ungefähr 1.000 mm²/s, vorzugsweise im Bereich von ungefähr 50 mm²/s bis ungefähr 200 mm²/s, weiter bevorzugt von ungefähr 100 mm²/s.

5. Schleifmaschine (10) nach einem der Ansprüche 3 oder 4, **dadurch gekennzeichnet, dass** die Dämpfungseinrichtung (70) ferner zumindest ein Ausgleichselement (140) aufweist, das zur Kompensation von Druckschwankungen oder Volumenschwankungen des Dämpfungsfluids (132) in dem zumindest einen Hohlraum (122) ausgebildet ist und das vorzugsweise aus einem elastomeren Werkstoff gebildet ist.

6. Schleifmaschine (10) nach Anspruch 5, **dadurch gekennzeichnet, dass** das Ausgleichselement (140) aus einem Fluorelastomer gebildet ist.

7. Schleifmaschine (10) nach einem der vorhergehenden Ansprüche, **dadurch gekennzeichnet, dass** die Dämpfungseinrichtung (70) eine erste Dämpfungseinheit (72), die einem ersten Spindelabschnitt (76) zugeordnet ist, und eine zweite Dämpfungseinheit (74) umfasst, die einem zweiten Spindelabschnitt (78) zugeordnet ist, wobei die erste Dämpfungseinheit (72) und die zweite Dämpfungseinheit (74) axial voneinander versetzt und einander zugewandt sind.

8. Schleifmaschine (10) nach Anspruch 7, **dadurch gekennzeichnet, dass** die erste Dämpfungseinheit (72) und die zweite Dämpfungseinheit (74) einen gemeinsamen Dämpfungsabschnitt (116, 118) aufweisen, der zumindest einen mit einem Dämpfungsfluid (132) befüllbaren Hohlraum (122) aufweist.

9. Schleifmaschine (10) nach einem der vorhergehenden Ansprüche, **dadurch gekennzeichnet, dass** die als Schleifspindel (28) oder Regelspindel (30) gestaltete Spindel (28, 30), die mit der integrierten Dämpfungseinrichtung (70) versehen ist, um ihre Längsachse (54, 56) rotatorisch antreibbar ist.

10. Schleifmaschine (10) nach Anspruch 9, **dadurch gekennzeichnet, dass** die Spindel (28, 30) ferner einen ersten Zapfen (82) und einen zweiten Zapfen (88) aufweist, die voneinander abgewandte Enden der Spindel (28, 30) definieren, wobei die Zapfen (82, 88) über einen Hohlprofilabschnitt (80), insbesondere über ein Rohrprofil (98), miteinander verbunden sind, und wobei die Dämpfungseinrichtung (70) im Hohlprofilabschnitt (80) zwischen dem ersten Zapfen (82) und dem zweiten Zapfen (88) aufgenommen ist.

11. Schleifmaschine (10) nach Anspruch 10, **dadurch gekennzeichnet, dass** der erste Zapfen (82) einem ersten Spindelabschnitt (76) und der zweite Zapfen (88) einem zweiten Spindelabschnitt (78) zugeordnet ist, wobei der erste Spindelabschnitt (76) und der zweite Spindelabschnitt (78) mittelbar über den Hohlprofilabschnitt (80) miteinander verbunden sind, wobei zumindest der erste Spindelabschnitt (76) oder der zweite Spindelabschnitt (78) mit einem Hilfsmassenabschnitt (108, 110) einer Dämpfungseinheit (72, 74) der Dämpfungseinrichtung (70) versehen sind, und wobei der Hilfsmassenabschnitt (108, 110) vom Hohlprofilabschnitt (80) umschlossen ist.

12. Schleifmaschine (10) nach Anspruch 11, **dadurch gekennzeichnet, dass** der jeweilige Hilfsmassenabschnitt (108, 110) einstückig mit dem Zapfen (82, 88) des entsprechenden Spindelabschnitts (76, 78) ausgebildet ist, wobei der jeweilige elastische Abschnitt (112, 114) durch eine Materialschwächung (142, 144) im Spindelabschnitt (76, 78) gebildet ist, die zwischen dem Hilfsmassenabschnitt (108, 110) und dem Zapfen (82, 88) angeordnet ist, und wobei der elastische Abschnitt (112, 114) vom Hohlprofilabschnitt (80) umschlossen ist.

13. Schleifmaschine (10) nach Anspruch 11 oder 12, **dadurch gekennzeichnet, dass** der erste Spindelabschnitt (76) einen ersten Hilfsmassenabschnitt (108) und der zweite Spindelabschnitt (78) einen zweiten Hilfsmassenabschnitt (110) aufweist, wobei der erste Hilfsmassenabschnitt (108) durch eine erste Materialschwächung (142) im ersten Spindelabschnitt (76) begrenzt ist, die einen ersten elastischen Abschnitt (112) bildet, wobei der zweite Hilfsmassenabschnitt (110) durch eine zweite Materialschwächung (144) im zweiten Spindelabschnitt (78) begrenzt ist, die einen zweiten elastischen Abschnitt (114) bildet, wobei der erste Hilfsmassenabschnitt (108) und die erste Materialschwächung (142) einer ersten Dämpfungseinheit (72) zugeordnet sind, wobei der zweite Hilfsmassenabschnitt (110) und die zweite Materialschwächung (144) einer zweiten Dämpfungseinheit (74) zugeordnet sind, und wobei der erste Hilfsmassenabschnitt (108) und der zweite Hilfsmassenabschnitt (110) einander zugewandt sind und gemeinsam vom Hohlprofilabschnitt (80) umschlossen sind.

14. Schleifmaschine (10) nach Anspruch 13, **dadurch gekennzeichnet, dass** der erste elastische Abschnitt (112) durch einen ersten Einstich mit einem ersten Durchmesser (148) gebildet ist, wobei der zweite elastische Abschnitt (114) durch einen zweiten Einstich mit einem zweiten Durchmesser (150) gebildet ist, und wobei sich der erste Durchmesser (148) und der zweite Durchmesser (150) voneinander unterscheiden.

15. Schleifmaschine (10) nach einem der Ansprüche 10 bis 14, **dadurch gekennzeichnet, dass** der Dämpfungsabschnitt (116, 118) als Hohlraum (122) zur Aufnahme eines Dämpfungsfluids (132) ausgebildet ist, der durch den zumindest einen Hilfsmassenabschnitt (108, 110) und den Hohlprofilabschnitt (80) begrenzt ist, und wobei im Hohlprofilabschnitt (80) vorzugsweise zumindest eine dichtend verschließbare Zuführöffnung für das Dämpfungsfluid (132) ausgebildet ist.

## Claims

1. Centerless grinding machine (10), comprising a machine bed (12), a grinding spindle (28), that can be coupled to a spindle drive (36) and that is arranged to receive a grinding wheel (32), a regulator spindle (30) that can be coupled to a spindle drive (38) and that is arranged to receive a regulating wheel (34), a workpiece mount (46) for receiving a to-be-processed workpiece (50) between the grinding spindle (28) and the regulator spindle (30), wherein the grinding spindle (28) and the regulator spindle (30) are received at the machine bed (12) and are moveable with respect to one another, **characterized in that** at least the grinding spindle (28) or the regulator spindle (30) is arranged as a spindle comprising an integrated damping device (70), wherein the damping device (70) comprises at least one damping unit (72, 74) comprising an auxiliary mass section (108, 110), an elastic section (112, 114) and a damping section (116), which are integrated in the spindle (28, 30) and which jointly form a damped vibratory system to increase the dynamic stiffness of the spindle (28, 30).

2. Grinding machine (10) according to claim 1, **characterized in that** the auxiliary mass section (108, 110), the elastic section (112, 114) and the damping section (116, 118) are accommodated in a hollow profile section (80), particularly a tubular profile (98), of the spindle (28, 30).

3. Grinding machine (10) according to any of the preceding claims, wherein the damping section (116, 118) comprises at least one cavity (122) that is fillable with a damping fluid (132), particularly a viscous damping fluid, and wherein the damping behavior of the damping device (70) is preferably influenceable by selecting a viscosity of the damping fluid (132).

4. Grinding machine (10) according to claim 3, **characterized in that** the damping fluid (132) is a silicone oil, particularly a silicone oil having a kinetic viscosity in the range of about 50 mm²/s to about 1.000 mm²/s, preferably in the range of about 50 mm²/s to about 200 mm²/s, further preferred of about 100 mm²/s.

5. Grinding machine (10) according to claim 3 or 4, **characterized in that** the damping device (70) further comprises at least one compensation element (140), that is configured for compensating pressure variations or volume variations of the damping fluid (132) in the at least one cavity (122), and that is preferably formed from an elastomer material.

6. Grinding machine (10) according to claim 5, **characterized in that** the compensation element (140) is formed from a fluoroelastomer.

7. Grinding machine (10) according to any of the preceding claims, **characterized in that** the damping device (70) comprises a first damping unit (72), that is assigned to a first spindle section (76), and a second damping unit (74) that is assigned to a second spindle section (78), wherein the first damping unit (72) and the second damping unit (74) are axially displaced from one another and facing each other.

8. Grinding machine (10) according to claim 7, **characterized in that** the first damping unit (72) and the second damping unit (74) comprise a common damping section (116, 118), that comprises at least one cavity (122) that is fillable with a damping fluid (132).

9. Grinding machine (10) according to any of the preceding claims, **characterized in that** the spindle (28, 30), which is arranged as a grinding spindle (28) or a regulator spindle (30) and which is provided with the damping device (70), is drivable about its longitudinal axis (54, 56) for rotation.

10. Grinding machine (10) according to claim 9, **characterized in that** the spindle (28, 30) further comprises a first neck (82) and a second neck (88) that define ends of the spindle (28, 30) that are facing away from each other, wherein the necks (82, 88) are connected to one another via a hollow profile section (80), particularly a tubular profile (98), and wherein the damping device (70) is accommodated in the hollow profile section (80) between the first neck (82) and the second neck (88).

11. Grinding machine (10) according to claim 10, **characterized in that** the first neck (82) is associated with a first spindle section (76) and the second neck (88) is associated with a second spindle section (78), wherein the first spindle section (76) and the second spindle section (78) are mediately connected to one another via the hollow profile section (80), wherein at least the first spindle section (76) or the second spindle section (78) is provided with an auxiliary mass section (108, 110) of a damping unit (72, 74) of the damping device (70), and wherein the auxiliary mass section (108, 110) is surrounded by the hollow profile section (80).

12. Grinding machine (10) according to claim 11, **characterized in that** the respective auxiliary mass section (108, 110) is integrally formed with the neck (82, 88) of the respective spindle section (76, 78), wherein the respective elastic section (112, 114) is formed by a material weakening (142, 144) in the spindle section (76, 78) that is arranged between the auxiliary mass section (108, 110) and the neck (82, 88), and wherein the elastic section (112, 114) is surrounded by the hollow profile section (80).

13. Grinding machine (10) according to claim 11 or 12, **characterized in that** the first spindle section (76) comprises a first auxiliary mass section (108) and **in that** the second spindle section (78) comprises a second auxiliary mass section (110), wherein the first auxiliary mass section (108) is delimited by a first material weakening (142) in the first spindle section (76) that forms a first elastic section (112), wherein the second auxiliary mass section (110) is delimited by a second material weakening (144) in the second spindle section (78) that forms a second elastic section (114), wherein the first auxiliary mass section (108) and the first material weakening (142) are assigned to a first damping unit (72), wherein the second auxiliary mass section (110) and the second material weakening (144) are assigned to a second damping unit (74), and wherein the first auxiliary mass section (108) and the second auxiliary mass section (110) are facing each other and are together surrounded by the hollow profile section (80).

14. Grinding machine (10) according to claim 13, **characterized in that** the first elastic section (112) is formed by a first groove having a first diameter (148), wherein the second elastic section (114) is formed by a second groove having a second diameter (150), and wherein the first diameter (148) and the second diameter (150) are different from each other.

15. Grinding machine (10) according to any of the claims 10 to 14, **characterized in that** the damping section (116, 118) is arranged as a cavity (122) for accommodating a damping fluid (132), wherein the cavity (122) is delimited by the at least one auxiliary mass section (108, 110) and the hollow profile section (80), and wherein at least one sealingly closable inlet opening for the damping fluid (132) is arranged in the hollow profile section (80).

## Revendications

1. Affûteuse sans centres (10), avec un socle de machine (12), une broche d'affûtage (28) qui peut être couplée à un entraînement de broche (36) et qui est configurée de façon à recevoir une meule (32), une broche de réglage (30) qui peut être couplée à un entraînement de broche (38) et qui est configurée de façon à recevoir une meule de réglage (34), un porte-pièce (46) destiné à recevoir une pièce à usiner (50) entre la broche d'affûtage (28) et la broche de réglage (30), dans laquelle la broche d'affûtage (28) et la broche de réglage (30) sont montées sur le socle de machine (12) et sont déplaçables l'une par rapport à l'autre, **caractérisée en ce qu'**au moins la broche d'affûtage (28) ou la broche de réglage (30) est réalisée sous la forme d'une broche dotée d'un dispositif d'amortissement intégré (70), dans laquelle le dispositif d'amortissement (70) présente au moins une unité d'amortissement (72, 74) avec une partie de masse auxiliaire (108, 110), une partie élastique (112, 114) et une partie d'amortissement (116, 118), qui sont intégrées dans les broches (28, 30) et qui forment ensemble un système oscillant amorti pour augmenter la raideur dynamique des broches (28, 30).

2. Affûteuse (10) selon la revendication 1, **caractérisée en ce que** la partie de masse auxiliaire (108, 110), la partie élastique (112, 114) et la partie d'amortissement (116, 118) sont logées dans une partie de profilé creux (80), en particulier dans un profilé tubulaire (98), des broches (28, 30).

3. Affûteuse (10) selon l'une quelconque des revendications précédentes, **caractérisée en ce que** la partie d'amortissement (116, 118) présente au moins une cavité (122), qui peut être remplie avec un fluide d'amortissement (132), en particulier un fluide d'amortissement visqueux, et dans laquelle le comportement d'amortissement du dispositif d'amortissement (70) peut être influencé en particulier par un choix d'une viscosité du fluide d'amortissement (132).

4. Affûteuse (10) selon la revendication 3, **caractérisée en ce que** le fluide d'amortissement (132) est une huile de silicone, en particulier une huile de silicone avec une viscosité cinématique comprise dans la gamme d'environ 50 mm²/s à 1000 mm²/s, de préférence dans la gamme d'environ 50 mm²/s à environ 200 mm²/s, de préférence encore d'environ 100 mm²/s.

5. Affûteuse (10) selon une des revendications 3 ou 4, **caractérisée en ce que** le dispositif d'amortissement (70) présente en outre au moins un élément de compensation (140), qui est configuré en vue de la compensation de fluctuations de pression ou de fluctuations de volume du fluide d'amortissement (132) dans ladite au moins une cavité (122) et qui est de préférence réalisé en un matériau élastomère.

6. Affûteuse (10) selon la revendication 5, **caractérisée en ce que** l'élément de compensation (140) est réalisé en un élastomère fluoré.

7. Affûteuse (10) selon l'une quelconque des revendications précédentes, **caractérisée en ce que** le dispositif d'amortissement (70) comprend une première unité d'amortissement (72), qui est associée à une première partie de broche (76), et une seconde unité d'amortissement (74), qui est associée à une seconde partie de broche (78), dans laquelle la première unité d'amortissement (72) et la seconde unité d'amortissement (74) sont décalées axialement l'une de l'autre et sont tournées l'une vers l'autre.

8. Affûteuse (10) selon la revendication 7, **caractérisée en ce que** la première unité d'amortissement (72) et la seconde unité d'amortissement (74) présentent une partie d'amortissement commune (116, 118), qui présente au moins une cavité (122) pouvant être remplie avec un fluide d'amortissement (132).

9. Affûteuse (10) selon l'une quelconque des revendications précédentes, **caractérisée en ce que** la broche (28, 30) configurée comme broche d'affûtage (28) ou comme broche de réglage (30), qui est dotée du dispositif d'amortissement intégré (70), peut être entraînée en rotation autour de son axe longitudinal (54, 56).

10. Affûteuse (10) selon la revendication 9, **caractérisée en ce que** la broche (28, 30) présente en outre un premier tourillon (82) et un second tourillon (88), qui définissent des extrémités de la broche (28, 30) éloignées l'une de l'autre, dans laquelle les tourillons (82, 88) sont reliés l'un à l'autre par une partie de profilé creux (80), en particulier un profilé tubulaire (98), et dans laquelle le dispositif d'amortissement (70) est logé dans la partie de profilé creux (80) entre le premier tourillon (82) et le second tourillon (88).

11. Affûteuse (10) selon la revendication 10, **caractérisée en ce que** le premier tourillon (82) est associé à une première partie de broche (76) et le second tourillon (88) est associé à une seconde partie de broche (78), dans laquelle la première partie de broche (76) et la seconde partie de broche (78) sont reliées l'une à l'autre indirectement par la partie de profilé creux (80), dans laquelle au moins la première partie de broche (76) ou la seconde partie de broche (78) est dotée d'une partie de masse auxiliaire (108, 110) d'une unité d'amortissement (72, 74) du dispositif d'amortissement (70), et dans laquelle la partie de masse auxiliaire (108, 110) est entourée par la partie de profilé creux (80).

12. Affûteuse (10) selon la revendication 11, **caractérisée en ce que** la partie de masse auxiliaire respective (108, 110) est réalisée d'une seule pièce avec le tourillon (82, 88) de la partie de broche correspondante (76, 78), dans laquelle la partie élastique respective (112, 114) est formée par un amincissement de la matière (142, 144) dans la partie de broche (76, 78), qui est disposé entre la partie de masse auxiliaire (108, 110) et le tourillon (82, 88), et dans laquelle la partie élastique (112, 114) est entourée par la partie de profilé creux (80).

13. Affûteuse (10) selon la revendication 11 ou 12, **caractérisée en ce que** la première partie de broche (76) présente une première partie de masse auxiliaire (108) et la seconde partie de broche (78) présente une seconde partie de masse auxiliaire (110), dans laquelle la première partie de masse auxiliaire (108) est limitée par un premier amincissement de la matière (142) dans la première partie de broche (76), qui forme une première partie élastique (112), dans laquelle la seconde partie de masse auxiliaire (110) est limitée par un second amincissement de la matière (144) dans la seconde partie de broche (78), qui forme une seconde partie élastique (114), dans laquelle la première partie de masse auxiliaire (108) et le premier amincissement de la matière (142) sont associés à une première unité d'amortissement (72), dans laquelle la seconde partie de masse auxiliaire (110) et le second amincissement de la matière (144) sont associés à une seconde unité d'amortissement (74), et dans laquelle la première partie de masse auxiliaire (108) et la seconde partie de masse auxiliaire (110) sont tournées l'une vers l'autre et sont ensemble entourées par la partie de profilé creux (80).

14. Affûteuse (10) selon la revendication 13, **caractérisée en ce que** la première partie élastique (112) est formée par une première gorge avec un premier diamètre (148), dans laquelle la seconde partie élastique (114) est formée par une seconde gorge avec un second diamètre (150), et dans laquelle le premier diamètre (148) et le second diamètre (150) sont différents l'un de l'autre.

15. Affûteuse (10) selon l'une quelconque des revendications 10 à 14, **caractérisée en ce que** la partie d'amortissement (116, 118) est réalisée sous la forme d'une cavité (122) destinée à contenir un fluide d'amortissement (132), qui est limitée par ladite au moins une partie de masse auxiliaire (108, 110) et la partie de profilé creux (80), et dans laquelle de préférence au moins une ouverture d'alimentation à fermeture étanche pour le fluide d'amortissement (132) est formée dans la partie de profilé creux (80).
